# EUROPÄISCHE PATENTSCHRIFT

(11) **EP 3 386 604 B1**
(45) Veröffentlichungstag und Bekanntmachung des Hinweises auf die Patenterteilung: **27.11.2019**
(21) Anmeldenummer: 16816226.1
(22) Anmeldetag: 07.12.2016
(51) Int. Cl.: B01D 37/02, B01D 39/18

(54) **MODIFIZIERTE CELLULOSEFASERN UND HERSTELLUNGSVERFAHREN**
MODIFIED CELLULOSE FIBERS AND PREPARATION METHOD
FIBRES DE CELLULOSE MODIFIÉES ET PROCÉDÉ DE PRODUCTION

(30) Priorität: 08.12.2015 DE 102015121383
(43) Veröffentlichungstag der Anmeldung: 17.10.2018
(73) Patentinhaber: Technische Universität Berlin, 10623 Berlin (DE)
(72) Erfinder: KUNZ, Thomas, 10178 Berlin (DE); BRANDT, Niklas Ole, 13347 Berlin (DE); METHNER, Frank-Jürgen, 54634 Bitburg (DE)
(74) Vertreter: Fleuchaus, Andrea
(86) Internationale Anmeldenummer: PCT/EP2016/080155
(87) Internationale Veröffentlichungsnummer: WO 2017/097864

(56) Entgegenhaltungen:
- EP-A1- 2 280 098
- WO-A1-2015/036372

## Beschreibung

Die Erfindung betrifft ein Verfahren zur Herstellung von modifizierten Cellulosefasern zum Einsatz in Verfahren zur künstlichen Klärung von trübungsaktiven Substanzen aus Flüssigkeiten. Außerdem betrifft die Erfindung die Verwendung der modifizierten Cellulosefasern als ein Filterhilfsmittel zur künstlichen Klärung von trübungsaktiven Substanzen aus Flüssigkeiten.

Zu den wichtigsten Qualitätsmerkmalen von klaren Getränken wie z.B. Bier, Wein, Säften und anderen Flüssigkeiten gehören neben dem Geruch, dem Geschmack und der Farbe auch die chemisch-physikalische Haltbarkeit sowie die Glanzfeinheit. Um klare und brillante Biere bzw. Weine oder Säfte zu erhalten, müssen diese filtriert werden.

Insbesondere bei der Bierherstellung befinden sich nach abgeschlossener Reifung noch jede Menge Trübstoffe wie z.B. Hefezellen, Hopfenharze oder Eiweiß-Gerbstoffverbindungen in Schwebe, welche das Bier milchig und trüb aussehen lassen. Des Weiteren können der Geschmack und der Geruch des Bieres durch solche trübungsaktiven Substanzen negativ beeinflusst werden.

Eine Filtration, auch künstliche Klärung genannt, ist daher der letzte Schritt, den das Bier nach der Reifung und noch vor der Abfüllung durchlaufen muss. Bereits die Reifung (natürliche Klärung) verbessert die kolloidale Stabilität des Bieres durch Sedimentation von trübungsaktiven Substanzen. Darüber hinaus kann die Stabilität des Bieres mit Stabilisierungsmitteln und einer zusätzlichen Filtration (künstliche Klärung) verbessert werden. Die wichtigsten Gründe für die Notwendigkeit einer Filtration sind:
- Entfernung von Trübstoffen wie Hefezellen, Hopfenharze oder Eiweiß-Gerbstoffverbindungen;
- Zusätzliche Reduzierung von Stoffen, die im filtriertem Bier erneut Trübungen ausbilden können, wie Eiweiße oder Gerbstoffe;
- Entfernung von Mikroorganismen wie Hefen oder Bakterien;
- Glanzfeines Aussehen;
- Sensorische Verbesserung;

Um ein glanzfeines und keimfreies Bier zu erhalten, sind verschiedene Filtrationsverfahren bekannt. Weit verbreitet ist der Einsatz der Anschwemmfiltration (Deadend-Filtration) mit Kieselgur oder anderen Filterhilfsmitteln wie Perliten, Cellulose und Crosspure®. Ebenso üblich ist der Einsatz von Schichtenfiltern mittels gefertigter Filterschichten (Platten) oder/auch unter Verwendung der aufgeführten Filterhilfsmittel. Zunehmend wird auch die Membranfiltration (Crossflow-Filtration), z.B. in Kombination mit einer Vorklärung durch Separatoren, in Brauereien eingesetzt.

Mit allen Systemen können qualitativ hochwertige Biere hergestellt werden. Allerdings weisen diese dem Stand der Technik bekannte Anschwemmfiltration, Schichtenfiltration und Membranfiltration (Crossflow-Filtration) verschiedene Nachteile auf.

Bei der Anschwemmfiltration ist der zum Teil gesundheitlich bedenkliche Einsatz von Filterhilfsmitteln wie der Kieselgur und deren notwendige Entsorgung, sowie der unerwünschte Eintrag von pro-oxidativ agierenden Metallionen, z.B. Eisen, in die Getränkematrix als erheblicher Nachteil gegenüber der Membranfiltration zu betrachten. Weiterhin sind Membranfiltrationen sehr unflexibel betreffend die Sortenvielfalt und der damit bedingten Qualitätsunterschiede des Filtrates. Während bei der Anschwemmfiltration, durch Anpassung der Partikelgröße der Kieselgurmischung, auf die sich ändernde Qualität des Unfiltrates reagiert werden kann, reduziert sich die Filtrationsleistung der Membran automatisch bei Flüssigkeiten die schwererzu filtrieren sind. Aus diesem Grund werden bei Membranfilteranlagen immer mehrere Module parallel betrieben, wodurch zwar ein kontinuierlicher Prozess ermöglicht wird, der aber auch mit deutlich höheren Investitionssummen verbunden ist. Betriebs- und Installationskosten sind bei der Membranfiltration gegenüber der Anschwemmfiltration damit sehr viel höher, ebenso derVerbrauch an Strom und Wasser.

Ein weiterer entscheidender Nachteil, der durch die Verwendung von Kieselgur entsteht, ist der unerwünschte Eintrag von Schwermetall-Ionen, insbesondere ist der Eintrag von pro-oxidativ wirkendendem Eisen oder Kupfer nachteilig. Der Eiseneintrag im Bier resultiert neben dem Eintrag durch die Rohstoffe (Malz, Hopfen, Brauwasser, Hefe) zum einen aus freigesetzten Eisen aus der Kieselgurvoranschwemmung und zum anderen aus freigesetztem Eisen aus der kontinuierlichen Kieselgurdosage. Ein großer Teil des Eisens wird in den ersten 15 min bei der Voranschwemmung zu Beginn der Filtration abgegeben und nimmt dann kontinuierlich ab. Die kontinuierliche Dosage von Kieselgur führt allerdings weiterhin zu einem gleichbleibend hohen Eiseneintrag in das Bier. Die Gesamtmenge des bierlöslichen Eisens, bzw. auch im geringeren Maße von Kupfer, ist von der Kieselgursorte abhängig. Der empfohlene Grenzwert liegt bei 0,20 mg/l. Allerdings weisen neuste Forschungserkenntnisse darauf hin, dass aufgrund des starken Einflusses der Metallionen auf die oxidative und kolloidale Bierstabilität weitaus niedrigere Werte von <0,05 mg/l im Bier anzustreben und wünschenswert sind.

Zwischenzeitlich wurde Kieselgur außerdem durch die "Deutsche Forschungsgemeinschaft (DFG) zur Prüfung gesundheitsschädlicher Arbeitsstoffe" in ihrer MAK- und BAK-Werte Liste aufgenommen und in die Kategorie 1 "krebserregend bei Menschen" eingestuft. Die Entsorgung von gebrauchter Kieselgur ist außerdem als "überwachungsbedürftiger Abfall" zu bewerten und führt damit zu einer aufwand- und kostenintensiven Entsorgung.

Auch erwiesen sich Versuche, gebrauchte und als Filterhilfsmittel unbrauchbare Kieselgur zu regenerieren, als in der Praxis nur bedingt durchführbar. Aufgrund der unsicheren Lage bezüglich weiterer gesetzlicher Verschärfungen im Umgang mit und bei der Entsorgung von Kieselgur sowie der in den letzten Jahren voranschreitenden technischen Entwicklung im Bereich der Membranfiltration, sind einige Brauereien dazu übergegangen die Membranfiltration zu verwenden.

Unter den o.g. Gesichtspunkten wäre die ideale Bierfiltration, eine Anschwemmfiltration ohne Verwendung von Kieselgur, bei der die vorhandenen Anschwemmfiltrationsanlagen bzw. Schichtenfiltrationsanlagen in den Brauereien weiter genutzt werden können.

Aus diesen Gründen besteht ein dringender Bedarf an Kieselgur-freien Filterhilfsmitteln.

EP 1333 906 B1 beschreibt hierzu ein alternatives regenerierbares Filterhilfsmittel, Crosspure®. Dieses Filterhilfsmittel besteht zu 70% aus Polystyren, welches bereits für die Lebensmittelproduktion zugelassen und heutzutage weit verbreitet ist. Weitere Bestandteile sind vernetztes Polyvinylpyrrolidon (PVP) oder Polyvinylpolypyrrolidon (PVPP). Mit diesem Filterhilfsmittel können durch das physikalische Verfahren partikuläre Trübstoffe entfernt, sowie gelöste trübungsaktive Polyphenole zusätzlich gebunden werden.

Allerdings hat sich gezeigt, dass das regenerierbare Crosspure® Filterhilfsmittel einen entscheidenden Nachteil aufweist, da es aus einer Mischung aus grobem und feinem Filterhilfsmittel zusammengestellt ist. Nach der Verwendung und der anschließenden Regeneration ist ebenfalls eine undefinierte Mischung aus groben und feinen Filterhilfsmittelpartikeln vorhanden. Diese Mischung ist nach derzeitigem Stand der Technik noch nicht praxistauglich bzw. kann nicht wirtschaftlich genug getrennt werden. Entsprechend ist keine ausreichende Genauigkeit bei der Adaptierbarkeit des jeweils notwendigen Filterhilfsmittels an unterschiedliche Unfiltrate bzw. Filtrationsprozessschritte wie z.B. der Voranschwemmung mehr gegeben. Die Mehraufwendungen, um wieder eine ausreichende Genauigkeit zu erzielen, verursachen höhere Filtrationskosten als bei vergleichbaren Verfahren.

EP 2 280 098 A1 offenbart regenerierte Cellulosefaser, wobei in die Faser Carboxymethylcellulose (CMC), in einem Anteil von 5 Gew.% bis 50 Gew.% bezogen auf underivatisierte Cellulose, inkorporiert ist. Die regenerierten Cellulosefasern sind durch ein Verfahren erhältlich, bei welchem einer Viskosespinnmasse sowohl ein Carbonat als auch Carboxymethylcellulose zugemischt wird.

Des Weiteren gibt es erste Versuche z.B. von F. Braun, H. Evers, etc., (Frank Braun et al., "Large-Scale Study on Beer Filtration with Combined Filter Aid Additions to Cellulose Fibres", Journal of the Institute of Brewing, Publication No. G-2011-0921-1107, 2011) unbehandelte Cellulosefasern und Kieselsol für die Filtration von Bieren einzusetzen. Bei diesem Verfahren wird zusätzlich ein zweiter Filtrationsschritt mittels eines Trapfilters durchgeführt. Mit diesem Verfahren werden allerdings nicht die Trübwerte einer Kieselgurfiltration (0,8/0,2 EBC (90°/25°)) erreicht, welche als Vergleichswerte für eine qualitativ hochwertige Bierfiltration heranzuziehen sind.

Die Einheit EBC - die nachfolgend weiterhin verwendet wird - steht hierfür European Brewing Convention, welche u.a. die brauwissenschaftliche Tätigkeit in Europa fördert. In EBC-Einheiten werden u.a. die Biertrübung, die Bierfarbe und der Bitterwert eines Bieres angegeben.

Dabei werden die in diesem Verfahren ermittelten Trübwerte, welche mit der Einheit EBC bezeichnet werden, nach der MEBAK - Brautechnische Analysenmethoden Würze Bier Biermischgetränke, Methodensammlung der Mitteleuropäischen Brautechnischen Analysenkommission, Selbstverlag der MEBAK, D-85358 Freising-Weihenstephan, 2012, ISBN 978-3-9805814-6-2, Seiten 193-194, Punkt 2.14.1.2 ermittelt.

In dem von Braun beschriebenen Verfahren wird ein Pilothorizontalfilter für die Anschwemmung horizontaler Schichten und ein Trapfilter mit 10 µm Spalten als Nachfilter in einem zweiten Filtrationsschritt eingesetzt. Durch diese zwei Filtrationsschritte ist das Verfahren nach Braun ebenfalls sehr aufwendig und somit kostenintensiv.

Ein weiterer Nachteil des Verfahrens nach Braun ist die Entsorgung der Cellulosefaser beim Einsatz in Mischung mit PVPP oder Kieselsol bzw. Silicagel. Es treten somit dieselben Probleme wie bei der Verwendung der Kieselgur auf.

Der vorliegenden Erfindung liegt daher die Aufgabe zugrunde, alternative Filterhilfsmittel für die künstliche Klärung von trübungsaktiven Substanzen aus Flüssigkeiten zur Verfügung zu stellen. Weiterhin stellt sich die Erfindung die Aufgabe Materialien für Filterhilfsmittel bereitzustellen, welche die aufgezeigten Nachteile des Standes der Technik überwinden.

Die Erfindung stellt hierzu ein alternatives Filterhilfsmittel zum Ersatz der Kieselgur bereit, das den qualitativen und wirtschaftlichen Anforderungen der Brauwirtschaft entspricht, sowie noch zusätzlichen Nutzen bei der Anwendung ermöglicht.

Das alternative Filterhilfsmittel wird durch das erfindungsgemäße Verfahren zur Herstellung von modifizierten Cellulosefasern ermöglicht, wobei die modifizierten Fasern beim Einsatz als Filterhilfsmittel im Verfahren zur künstlichen Klärung von trübungsaktiven Substanzen aus Flüssigkeiten die Nachteile des Standes der Technik beheben. Das Verfahren zur Herstellung der modifizierten Fasern sowie die modifizierten Fasern an sich, sind dabei Gegenstand der unabhängigen Ansprüche. Bevorzugte Ausführungsformen sind Gegenstand der Unteransprüche.

Demnach ist ein Gegenstand der Erfindung ein Verfahren zur Herstellung modifizierter Cellulosefasern umfassend einen oder mehrere der nachfolgenden Schritte:
I. Zubereitungsschritte
   a) Einwiegen einer Fasermischung bestehend aus
      80 - 99,9 Gew.% Cellulosefasern,
      0,1 - 10 Gew.% Croscarmellose-Natrium und
      0-10 Gew.% eines oder mehrerer Additive;
II. Quellungs- und Aufbereitungsschritte im neutral bis alkalischen Bereich
   b) Auffüllen der Einwaage mit einem polaren Lösungsmittel;
   c) Einstellen des pH-Wertes;
III. Erhitzungsschritte
   d) Aufheizen der Einwaage auf Kochtemperatur unter Rühren;
   e) Kochen der Einwaage unter Rühren;
   f) Abkühlung der Einwaage unter Rühren;
IV. Waschschritte
   g) Abtrennen des polaren Lösungsmittels;
   h) Waschen der Fasern;
V. Homogenisierungsschritte
   i) Auflockern und/oder zerkleinern durch Aufrühren der feuchten Masse;
VI. Fertigstellungsschritte (optional anwendbar)
   j) Trocknen der feuchten Masse;
   k) Isolieren und ggf. Verarbeiten der modifizierten Cellulosefasern.

Ebenfalls Gegenstand der Erfindung sind die durch das erfinderische Verfahren gewonnenen modifizierten Cellulosefasern, welche als Filterhilfsmittel für die künstliche Klärung von trübungsaktiven Substanzen aus einer Flüssigkeit genutzt werden können, bestehend aus:
a) 80 - 99,9 Gew.% eines Hauptfunktionsstoff auf der Basis von Cellulosefasern;
b) 0,1 - 10 Gew.% eines Hilfsfunktionsstoff auf Basis von Carboxymethylcellulosen und
c) 0-10 Gew.% eines oder mehrerer Additive.

Des Weiteren ist Gegenstand der Erfindung ein Filterhilfsmittel enthaltend eine oder mehrere erfindungsgemäß modifizierte Cellulosefasern.

Für das erfindungsgemäße Verfahren wird in einem ersten Verfahrensschritt (a) eine Fasermischung bestehend aus 80 - 99,9 Gew.% Cellulosefasern, 0,1 - 10 Gew.% Croscarmellose-Natrium und 0 - 10 Gew.% eines oder mehrerer Additive eingewogen.

Insbesondere werden für das erfinderische Verfahren Fasermischungen eingesetzt bzw. bereitgestellt, die zum Einen einen Anteil an Cellulosefasern von 80 - 85 Gew.%, 82 - 90 Gew.%; 85 - 92 Gew.%, 87 - 95 Gew.%, 90 - 99 Gew.%, 92 - 99,0 Gew.%, 90 - 99,9 Gw.% aufweisen, und zum Anderen in ausgleichenden Gewichtsverhältnissen einen Anteil an Croscarmellose-Natrium und weiteren Additiven enthalten.

Typischerweise wird ein Anteil von Croscarmellose-Natrium zwischen 0,1 - 3 Gew.%, 0,1 - 0,5 Gew.%, 0,2 - 1 Gew.%, 0,5 - 1,5 Gew.%, 1-3 Gew.%, 0,8 - 2,5 Gew.%, 1,2 - 3,5 Gew.%, 1,5 - 3,8 Gew.%, 1,8 - 4 Gew.%; 2 - 4,5 Gew.%, 2,2 - 4,8 Gew.%, 2,5 - 6 Gew.%, 2,5 - 8 Gew.%, 3,0 - 8 Gew.%; 3,0 - 6 Gew.%, 3,2 - 7 Gew.%, 3,5 - 9 Gew.%; 2,5 - 9 Gew.%, 4,0 - 10 Gew.%, 4,5 - 10 Gew.% eingesetzt. Zum Auffüllen auf 100 Gew.% werden üblicherweise ein oder mehrere Additive bereitgestellt, wie nachfolgend beschrieben.

Die Summe der in der Fasermischung enthaltenden Bestandteile beträgt 100 Gew.% und setzt sich aus den Cellulosefasern, der Croscarmellose-Natrium und/oder einem oder mehrerer Additive zusammen.

Bei der Fasermischung handelt es sich um verschiedene Cellulosefasern unterschiedlicher Länge und Beschaffenheit. Unter den Cellulosefasern soll die Gruppe der Fasern enthaltend Cellulose, zellstoffbasierende Fasern, Fasern aus Getreide, aus Holz, aus Bambus, aus Gehölzschnitt, aus Gehölzabfällen oder Mischungen derselben verstanden werden. Durch die erfinderische und gezielte Aufarbeitung der Cellulosefasern mit Carboxymethylcellulosen bzw. insbesondere mit Croscarmellose-Natrium wird eine stärkere Vernetzung zwischen den einzelnen Fasern erreicht, bzw. durch die Einlagerung anderer Verbindungen feinere Verzweigungen ausgebildet. Dies wird einerseits durch die mechanische Verbindung der Fasern untereinander, als auch durch die verbesserten chemischen Verbindungseigenschaften der modifizierten Cellulosefasern erreicht.

Durch die erfinderische Aufarbeitung der Cellulosefaser bekommt diese eine zusätzliche Funktionalität, erkennbar an einem verbesserten Bindevermögen von spezifischen Proteinen, wodurch auch trübungsaktive Proteine bzw. Protein-Polyphenolverbindungen entfernt werden können. In Folge werden weniger bis gar keine Stabilisierungsmittel wie z.B. Silicagel oder Kieselgur benötigt und der erfindungsgemäße Einsatz der modifizierten Fasern als Filterhilfsmittel kostengünstiger.

Carboxymethylcellulosen (CMC) sind Celluloseether, also Derivate der Cellulose, bei denen ein Teil der Hydroxygruppen als Ether mit einer Carboxymethyl-Gruppe (-CH2-COOH) verknüpft sind. Zur Herstellung wird die aus Nadel- und Laubhölzern gewonnene Cellulose oder der Zellstoff gemahlen und mit Natronlauge in die reaktivere Alkalicellulose überführt. Die Alkylierung der Alkalicellulose zur Carboxymethylcellulose erfolgt in Chloressigsäure. Die Cellulose-Struktur bleibt erhalten und ist in der Säureform unlöslich in Wasser. Die Carboxymethylcellulosen sind allerdings gut in basischen Lösungen löslich.

Carboxymethylcellulose ist in der EU als Lebensmittelzusatzstoff der Nummer E 466 zugelassen. Diesbezüglich ist die Entsorgung des erfinderischen Filterhilfsmittels bestehend aus der modifizierten Cellulosefaser enthaltend CMC weniger kostenintensiv, vielmehr kann dieses Filterhilfsmittel auf einfachste Weise kompostiert werden. Weiterhin ist eine Zulassung als Tierfutter oder Futterersatz möglich. Eine durch Quervernetzung erzeugte wasserunlösliche Variante von Carboxymethylcellulose ist Croscarmellose-Natrium.

Es ist allgemeines Grundwissen, dass Croscarmellose-Natrium ein wasserunlöslicher, quellfähiger Vielfachzucker ist, der als Hilfsstoff in der Arzneimittelherstellung und der Lebensmitteltechnologie verwendet wird. Die Vernetzung der Carboxymethylcellulose-Polymerketten erfolgt durch Glycolsäure, die sich aus überschüssiger Chloressigsäure aus dem vorangegangenen Prozessschritt bei der Carboxymethylcellulose bildet. Eine Deprotonierung der Carboxylgruppen durch die gebildete Säure ermöglicht dann die Ausbildung von Bindungen zu anderen Polymerketten. Der Grad derVernetzung kann dabei über den pH-Wert und die Temperatur gesteuert werden. Vernetzungsmittel kommen dabei nicht zum Einsatz. Durch die Quervernetzung der Polymerketten ist Croscarmellose-Natrium praktisch unlöslich in Wasser, weist jedoch ein hohes Wasserbindevermögen auf und quillt unter Wasseraufnahme auf das 4-bis 8-fache ihres Ausgangsvolumens auf. Durch das Aufquellen der Fasern und das damit vergrößerte Volumen wird vorteilhafterweise ein verbessertes Aufnahmeverhalten (Filtrationsverhalten) von Trübstoffen erzielt. In Aceton, Ethanol, Toluol und Diethylether ist Croscarmellose-Natrium ebenfalls so gut wie nicht löslich. Weiterhin ist es interessant, dass Croscarmellose-Natrium vom menschlichen Organismus nicht resorbiert wird.

Unter Additiven zum Einsatz im erfindungsgemäßen Verfahren sind Hilfsstoffe und/oder Zusatzstoffe zu verstehen, die der Fasermischung zugesetzt werden können, um einen positiven Effekt auf die Herstellung und/oder Lagerung und/oder Verarbeitung und/oder auf die Eigenschaften der modifizierten Cellulosefasern während oder nach der Filtration zu erreichen. Die eingesetzten Additive entsprechen den Anforderungen an gute Umweltverträglichkeit, geringe Gesundheitsgefährdung, hohe Wirtschaftlichkeit und hohe Stabilität. Bevorzugte Additive zum erfindungsgemäßen Verfahren sind z.B. eine oder mehrere der Additive ausgewählt aus der Gruppe der Additive bestehend aus Pektin, Carrageen, Hausenblase, Hydrokolliden, Stärke, Gallotanninen, Kieselsol, Silicagel, Polyvinylpyrrolidon, Polyvinylpolypyrrolidon (PVPP), welche allein oder in Mischungen zugegeben werden können. Durch diese Additive wird die technische Anwendbarkeit verbessert und die Filterleistung der modifizierten Cellulosefasern weiter gesteigert.

Gemäß dem erfindungsgemäßen Verfahren erfolgt im Verfahrensschritt (b) das Auffüllen der Einwaage aus dem Verfahrensschritt (a) mit einem polaren Lösungsmittel. Als polares Lösungsmittel kommen Lösungsmittel aus der Gruppe der Lösungsmittel enthaltend Wasser, Alkohol, wässrige Lösungen mit Carbonsäuren, Armine oder Mischungen derselben in Betracht.

Im Verfahrensschritt (c) erfolgt das Einstellen des pH-Wertes zur Aufarbeitung der Cellulosefasern. In der Aufarbeitung der Fasern ist die Einstellung des pH-Wertes, ein den Reaktionsprozess verändernder Schritt. Das erfindungsgemäße Verfahren wird vorzugsweise im alkalischen oder schwach alkalischen bis neutralen pH-Wert und sogar schwach saureren Bereich durchgeführt und es konnte explizit gezeigt werden, dass das erfinderische Verfahren in einem pH-Wert Bereich von pH6 bis pH13 gut durchgeführt werden kann.

In Abhängigkeit der eingesetzten Ausgangsmaterialien ist es sinnvoll den pH-Wert anzupassen und zu überprüfen, bei welchem pH-Wert unerwünschte Bestandteile wie z.B. Metallionen ausgewaschen werden. Da andere Inhaltsstoffe für verschiedene Ausgangsmaterialien zu erwarten sind, kann erfindungsgemäß der pH-Wert mit einer oder mehreren Säuren bzw. Basen eingestellt werden. Regelmäßig verwendet der Fachmann hierzu HCL oder NaOH.

In Versuchen zu verschiedenen pH-Werten zeigte sich, dass durch das Einstellen des pH-Wertes, im alkalischen Bereich bei einem pH-Wert >/= 9 und bei Einsatz einiger Ausgangsprodukte ein signifikanter Anstieg des Eisenwertes in dem polaren Lösungsmittel gemessen werden kann. Dieser Eisenanteil wird zum Teil als gebildetes Eisenhydroxid bereits bei der Aufarbeitung der Faser ausgewaschen und kann somit nachfolgend, während des Filtrationsprozesses nicht mehr in das Bier gelangen (Tabelle 1).

**Tabelle 1: Eisenmessung in abgenutschter Aufarbeitungslösung**

| **Faser** | **Croscarmellose-Natrium** | **pH-Wert bei Aufarbeitung** | **Eisen** | **STABW** |
|---|---|---|---|---|
| | **%** | - | **ppb** | **ppb** |
| Cellulosefaser A | 2 | - | 125 | 2.2 |
| Cellulosefaser A | 2.5 | - | 207 | 0.0 |
| Cellulosefaser A | 3 | 9 | 442 | 5.7 |

Es ist somit als besonders hervorzuheben, dass die Durchführung des Verfahrens im alkalischen Bereich für die erfindungsgemäße Anwendung der modifizierten Faser weitere Vorteile bei der Filtration mit sich bringt.

Im Verfahrensschritt (d) bis (f) erfolgt die Aufarbeitung unter Rühren. Das Rühren kann z.B. durch einen Magnetrührer realisiert werden, schließt aber andere Methoden zum Rühren der Einwaage nicht aus und ist auch nicht auf diese beschränkt.

Im Verfahrensschritt (d) und (e) erfolgt das Kochen der Einwaage unter Rühren. Der Kochprozess kann bis zu 360 min dauern. In Abhängigkeit der verwendeten Faser und/oder vorheriger und/oder folgender Prozesse, kann der Kochprozess auch länger als 360 min andauern.

Bereits nach einem 60-minütigen Kochprozess sind modifizierte Cellulosefasern erhältlich, die im Filtrationsverfahren bereits zu einer Abnahme der Trübung und einer Reduktion des Trübungswerts von 45 EBC auf 19 EBC führen. Die Aufarbeitung der Cellulosefasern führt daher bereits zu einer signifikanten Verbesserung der Trübungswerte in nachfolgenden Filtrationen.

Das Kochen erfolgt vorzugsweise bei einer Kochtemperatur, welche im Bereich zwischen 60°C bis 105°C, alternativ 60°C bis 80°C, 70°C bis 90°C, 80°C bis 105°C gehalten wird. Das Kochen kann auch unter Druck erfolgen, wodurch Kochtemperaturen über dem Siedepunkt des jeweiligen polaren Lösungsmittels erreicht werden können. Ein Kochen unter leichtem Überdruck ist bei industrieller Produktion vorgesehen.

Im Verfahrensschritt (f) erfolgt unter Rühren eine Abkühlung der Fasermischung.

Im Verfahrensschritt (g) erfolgt das Abtrennen des polaren Lösungsmittels von der Einwaage z.B. durch Abnutschen mittels Vakuumpumpe über Filterpapier. Das Abtrennen des polaren Lösungsmittels sei hierbei nicht auf die Vakuumpumpe beschränkt. Auch weitere im Stand der Technik bekannte Verfahren zum Abnutschen bzw. Abtrennen können verwendet werden.

In Verfahrensschritt (h) wird die Einwaage gewaschen, z.B. mit bi-destilliertem Wasser, Leitungswasser, leicht alkalischer oder leicht saurer Lösung, Salzlösung (z.B. Kochsalzlösung) durch erneutes Abnutschen bzw. Abtrennen mit einerVakuumpumpe.

In Verfahrensschritt (i) wird die feuchte Masse z.B. durch Aufrühren aufgelockert, zerkleinert und/oder homogenisiert. Auch andere dem Fachmann bekannte auflockernde, zerkleinernde oder homogenisierende Verfahren können eingesetzt werden.

Im optionalen Verfahrensschritt (j) wird die feuchte Masse auf einen Restwassergehalt von ca. 2% bis 10% getrocknet. Durch die Trocknung wird die modifizierte Cellulosefaser haltbarer, transportierbar und kann nach diesem Verarbeitungsschritt in einer automatischen Anwendung zur Filtration eingesetzt werden. Allerdings kann die modifizierte Cellulosefaser auch ohne den Verfahrensschritt (j) in der vorliegenden feuchten Masse direkt im Filtrationsverfahren, z.B. für die Anschwemmfiltration, eingesetzt werden. Eine Trocknung ist z.B. vorteilhaft, wenn z.B. die modifizierte Cellulosefaser anschließend in Platten gepresst wird, beispielsweise für die Verwendung in einem Schichtenfilter.

In Verfahrensschritt (k) wird die modifizierte Faser isoliert. Als isolieren kann dabei auch verstanden werden, dass die modifizierte Cellulosefaser lediglich aus dem Modifizierungsprozess in den Filtrationsprozess überführt wird.

Selbstredend sind die Verfahrensschritte (b) und (d)-(k) frei kombinierbar, austauschbar, ersetzbar und abwandelbar im Rahmen des bekannten Stands der Technik.

Unter der modifizierten Cellulosefaser ist eine durch thermische und/oder mechanische und/oder chemische Einwirkung und/oder durch Additive gezielt veränderte Cellulosefaser zu verstehen, mit welcher die Filtrationseigenschaften verbessert werden.

Beispielsweise wird durch die erfindungsgemäße Aufarbeitung der Cellulosefasern der Eisengehalt in den Fasern signifikant herabgesetzt und dadurch der filtrationsbedingte pro-oxidativ agierende Eiseneintrag gegenüber der Verwendung von Kieselgur als Filterhilfsmittel signifikant herabgesetzt. In Folge dessen kann eine höhere oxidative Bierstabilität erreicht werden. Weiterhin erlaubt die erfindungsgemäß aufgearbeitete Cellulosefaser eine zusätzliche Bindung von trübungsaktiven Proteinen bzw. Protein-Polyphenolverbindungen und kann durch diesen Zusatzeffekt gegenüber der Filtration mit Kieselgur oder Celluloserohfaser eine höhere kolloidale Stabilität im Bier erreichen.

Dadurch kann die Zugabe von üblicherweise eingesetzten Stabilisierungsmitteln wie PVPP oder Kieselsol bzw. Silicagel bei gleicher kolloidaler Stabilität herabgesetzt werden, wodurch die Filtration kostengünstiger durchgeführt werden kann.

Die Cellulosefasern sind ausgewählt aus der Gruppe der Fasern enthaltend Cellulose, zellstoffbasierende Fasern, Fasern aus Getreide, aus Holz, aus Bambus, aus Gehölzschnitt, aus Gehölzabfällen oder Mischungen derselben. Die Fasern weisen eine mittlere Faserlänge im Bereich von <1 bis 500µm auf. Hierbei ist unter Fasern mit einer mittleren Faserlänge die produktionsbedingte Streuung und beim kombinierten Einsatz von Fasern mit unterschiedlichen Längen ein mittlerer Bereich von 1-500µm zu verstehen. Die Fasern können unterschiedliche Faserlängen (Langfaser, Kurzfaser) aufweisen, da das Anschwemmverhalten sehr stark von der mittleren Faserlänge und dem spezifischen Gewicht bzw. der Feinheit der Cellulosefaser beeinflusst wird. Aus der Verwendung von Cellulosefasern zur Herstellung modifizierter Cellulosefasern ergeben sich für die Anwendung dieser für ein Filterhilfsmittel weitere Vorteile:
- Die Wirtschaftlichkeit ist trotz höherer Beschaffungskosten für die Cellulosefasern im Vergleich zur Kieselgurfiltration verbessert.
- Es können durch einen geringeren Massenbedarf bei gleicher Filtrationskapazität niedrigere Betriebskosten realisiert werden.

Der als Ausgangsmaterial zur Herstellung von filtrierenden Fasern verwendete Zellstoff ist ein nachwachsender Rohstoff. Die heute im Tagebau abbauwürdigen Kieselgur-Vorkommen sind vor ca. 15 Mio. Jahren aus den abgestoßenen Panzern fossiler Kieselalgen (Diatomeen) entstanden und in ihrer Menge begrenzt. Diesbezüglich ist in der Zukunft eine Preissteigerung aufgrund der Verknappung dieser Ressource nicht unwahrscheinlich und ein Rückgreifen auf nachwachsende Rohstoffe daher als durchaus vorteilhaft zu betrachten.

Wie bereits oben erwähnt, wurde die Kieselgur wegen der hohen Staubentwicklung in die MAK- und BAK-Werte Liste aufgenommen und in Kategorie 1 "krebserregend bei Menschen" eingestuft.

Für die Filtration von Bieren wird diesbezüglich vermehrt nach geeigneten Alternativen für die Kieselgurfiltration gesucht. Die Filtration mit einem Filterhilfsmittel basierend auf Cellulosefasern ist so gestaltet, dass eine übermäßige Staubentwicklung unterbunden wird.

Im Vergleich zur Filtration mit Kieselgur, werden mit einem Filterhilfsmittel gemäß der vorliegenden Erfindung keine oder wenigstens deutlich weniger Eisenionen in das Bier eingetragen. Somit entstehen weniger Radikale, wodurch das endogene antioxidative Potential des Bieres weniger stark reduziert und damit die oxidative Stabilität verbessert wird. In Folge dessen ergibt sich eine bessere Geschmacksstabilität und auch die kolloidale Stabilität wird verlängert.

Im Stand der Technik wird Bier mit Stabilisierungsmitteln wie z.B. PVPP, Silicagel bzw. Kieselgel behandelt, um die physikalische Stabilität des Bieres zu verbessern. Dadurch werden trübungsaktive Polyphenole (PVPP) oder Proteine (Silicagel) bzw. Polyphenol-Proteinverbindungen während dem Brauprozess entfernt, um eine höhere Trübungsstabilität bei verkaufsfertigen Bieren zu erhalten. Dieser Schritt erfolgt typischerweise sowohl bei der Anschwemmfiltration als auch bei der Membranfiltration.

Durch die erfindungsgemäße Modifizierung der Cellulosefasern erhalten die Fasern eine zusätzliche Funktionalität, wodurch trübungsaktive Proteine bzw. Protein-Gerbstoffverbindungen bei der Filtration entfernt werden können. Auf diese Weise wird somit ein Mehrwert geschaffen, der sowohl die Investitionskosten, als auch die Betriebskosten einer Brauerei durch die Herabsetzung bzw. Vermeidung von zusätzlichen Stabilisierungsmitteln deutlich verbessert.

In einer Ausführungsform der Erfindung weist die Fasermischung gemäß dem Verfahrensschritt (a) 92 - 99 Gew.% Cellulosefasern, 1-8 Gew.% Croscarmellose-Natrium und 0-4 Gew.% eines oder mehrerer Additive auf.

In einer weiteren Ausführungsform der Erfindung ist die Fasermischung gemäß dem Verfahrensschritt (a) ausgewählt aus einer Zusammensetzung bestehend aus 90 - 99,9 Gew.% Cellulosefasern, 0,1 - 5 Gew.% Croscarmellose-Natrium und 0 - 5 Gew.% eines oder mehrerer Additive, oder aus 90 - 99 Gew.% Cellulosefasern und 1 - 5 Gew.% Croscarmellose-Natrium und 0-5 Gew.% eines oder mehrerer Additive. Besonders bevorzugt ist eine Zusammensetzung aufweisend 96 Gew.% Cellulosefasern, 3 Gew.% Croscarmellose-Natrium und 1 Gew.% Additive.

Die Additive sind gemäß weiterer Ausführungsformen ausgewählt aus der Gruppe der Pektine, Carrageene, Hausenblase, Hydrokollide, Stärke, Gallotannine, Kieselsol, Silicagel, Polyvinylpyrroliden und/oder Polyvinylpolypyrrolidon (PVPP). Durch den Einsatz von Additiven, insbesondere von Pektin, Carrageenen, Hausenblase, Hydrokolloiden, Stärke kann die technische Anwendbarkeit verbessert und die Filtrationsleistung zusätzlich gesteigert werden. Durch die Verwendung von Stabilisierungs- und Klärungsmitteln kann somit eine weitere Verbesserung der modifizierten Cellulosefasern und insbesondere ein verbessertes Ausfiltern von z.B. Eiweißbestandteilen oder Metallionen erreicht werden.

Der pH-Wert gemäß dem Verfahrensschritt (d) wird mit wenigstens einer Säure, vorzugsweise Salzsäure (HCl) und/oder mit wenigstens einer Base, vorzugsweise Natriumhydroxid (NaOH) auf einen pH-Wert von pH6 - pH13, alternativ auf pH7 - pH12, pH8 - pH11, pH8 - pH12, pH9 - pH11, pH7 - pH10, pH11 - pH12, weiter alternativ mit Natriumhydroxid auf einen pH-Wert größer als pH9, oder mit Natriumhydroxid auf einen pH-Wert zwischen pH11 - pH13 eingestellt.

Zum Absenken des pH-Wertes können auch Säuren aus der Gruppe der Säuren enthaltend Salz- oder Phosphorsäure oder Mineralsäuren wie Schwefel- und Salpetersäure oder Schweflige Säure eingesetzt werden. Zum Erhöhen des pH-Wertes kommen auch Basen aus der Gruppe der Basen enthaltend Kaliumhydroxid, Ammoniak, Kalkwasser, Amine in Frage.

Die Cellulosefaser als Hauptfunktionsstoff ist ausgewählt aus der Gruppe der Fasern enthaltend Cellulose, zellstoffbasierende Fasern, Fasern aus Getreide, aus Holz, aus Bambus, aus Gehölzschnitt, aus Gehölzabfällen oder Mischungen derselben und wobei die Fasern eine mittlere Faserlänge im Bereich von <1 bis 500µm aufweisen.

Als Hilfsfunktionsstoff ist 0,1 - 10 Gew.% Croscarmellose-Natrium als wasserunlösliche Variante von Caboxymethylcellulose enthalten.

Als Additive werden Additive aus der Gruppe der Pektine, Carrageene, Hausenblase, Hydrokollide, Stärke, Gallotannine, Kieselsol, Silicagel, Polyvinylpyrrolidon und/oder Polyvinylpolypyrrolidon verwendet.

Beim Einsatz der modifizierten und, optional, getrockneten oder isolierten Cellulosefasern für die künstliche Klärung liegt die modifizierte Cellulosefaser bei erneutem Lösen oder Quellen der erfinderisch modifizierten Cellulosefasern in Wasser, in einem pH-Wert Bereich von pH5 - pH8 vor.

Weiterhin stellt die Erfindung ein Filterhilfsmittel bereit, welches eine oder mehrere gemäß der Erfindung modifizierte Cellulosefasern enthält. Dieses Filterhilfsmittel kann z.B. als Anschwemmkerzenfilter oder als Anschwemmschichtenfilter hergerichtet werden. Hierzu werden die erfindungsgemäß modifizierten und optional getrockneten Fasern entsprechend den technischen Anforderungen geschichtet, gestopft, aufgezogen, gepresst oder eingefüllt.

Das Filterhilfsmittel wird vorzugsweise in einem Verfahren zur künstlichen Klärung von trübungsaktiven Substanzen aus einer Flüssigkeit mit einer Voranschwemmung des Filterhilfsmittels in einem ersten Schritt, zur Filtration der zu klärenden Flüssigkeit durch das Filterhilfsmittel in einem zweiten Schritt und für den Einsatz des Filterhilfsmittels als laufende Dosage während der Filtration in einem dritten Schritt eingesetzt.

Dabei ist das Verfahren nicht auf die aufgelisteten Schritte beschränkt, vielmehr können noch weitere Schritte und/oder Zwischenschritte durchgeführt werden. Der Einsatz eines Filterhilfsmittels ist auch nicht auf ein einzelnes Filterhilfsmittel und/oder die aufgelisteten Schritte begrenzt. Es können vielmehr verschiedene Filterhilfsmittel unterschiedlicher Mischungen und Gewichtsprozente der Hauptfunktionsstoffe und/oder Hilfsfunktionsstoffe und/oder eines oder mehrerer Additive eingesetzt werden.

Als beispielhaftes Verfahren zur künstlichen Klärung wird hier eine Anschwemmfiltration beschrieben. Bei der Anschwemmfiltration wird z.B. ein Anschwemmkerzenfilter eingesetzt. Weiterhin kann ein Anschwemmschichtenfilter bzw. Plattenschichtfilter eingesetzt werden.

Nachfolgend werden verschiedene Versuche zur Erstellung des erfinderischen Verfahrens und zur Herstellung der modifizierten Cellulosefasern sowie die erzielten Resultate erläutert, wobei diese die Erfindung nur beispielhaft anhand von Laborversuchen und Versuchen in der Forschungsbrauerei der TU Berlin erläutern und keine Einschränkung des allgemeinen Erfindungsgedankens in Bezug auf Abwandlungen darstellen.

Dabei zeigen die Figuren:
Fig. 1 den Filtrationsverlauf der Filtrox-Filtrationsversuche mit Kieselgur;
Fig. 2 den Filtrationsverlauf der Filtrox-Filtrationsversuche mit Rohfaser / modifizierter CellulosefaserA;
Fig. 3 den Trübungsverlauf über den gesamten Filtrationsversuch mit Rohfaser / modifizierter CellulosefaserA;
Fig. 4 das Verhalten von modifizierten Cellulosefasern mit verschiedenen Anteilen an Croscarmellose-Natrium;
Fig. 5 die Versuche mit verschiedenen pH-Werten in der Aufarbeitung der modifizierten Fasern mit 2 Gew.% Croscarmellose-Natrium;
Fig. 6 den Filtrationsverlauf des Versuchs mit Croscarmellose-Natrium modifizierter CellulosefaserA;
Fig. 7 den Trübungsverlauf über die gesamte Filtrationszeit bei Nutzung der modifizierten CellulosefaserA;
Fig. 8 den Filtrationsverlauf mit Kieselgur;
Fig. 9 den Trübungsverlauf mit Kieselgur;
Fig.10 den Filtrationsverlauf mit Rohfaser / modifizierter Cellulosefaser A;
Fig.11 den Trübungsverlauf mit Rohfaser/ modifizierter CellulosefaserA;
Fig.12 den Filtrationsverlauf mit modifizierter Cellulosefaser A, mit 3 Gew.% Croscarmellose-Natrium, bei pH11;
Fig.13 den Trübungsverlauf mit modifizierter Cellulosefaser A, mit 3 Gew.% Croscarmellose-Natrium, bei pH11;
Fig.14 den Filtrationsverlauf mit modifizierter Cellulosefaser A und B, mit 3 Gew.% Croscarmellose-Natrium, bei pH11;
Fig.15 den Trübungsverlauf mit modifizierter Cellulosefaser A und B, mit 3 Gew.% Croscarmellose-Natrium, bei pH11; und
Fig.16 die ESR-Messung von Bieren aus weiteren Versuchen.

### Beispiele

Zur besseren Beurteilung der Eignung der modifizierten Cellulosefasern wurden mit Cellulosefasern (Faser A und Faser B) Bierfiltrationsversuche durchgeführt.

Zuvor wurde die Vergleichs- bzw. Referenzfiltration unter Verwendung des Filterhilfsmittels Kieselgur an der Filtrox-Anlage durchgeführt. Es fanden 2 Voranschwemmungen (VA) und die Filtration statt (Tabelle 2).

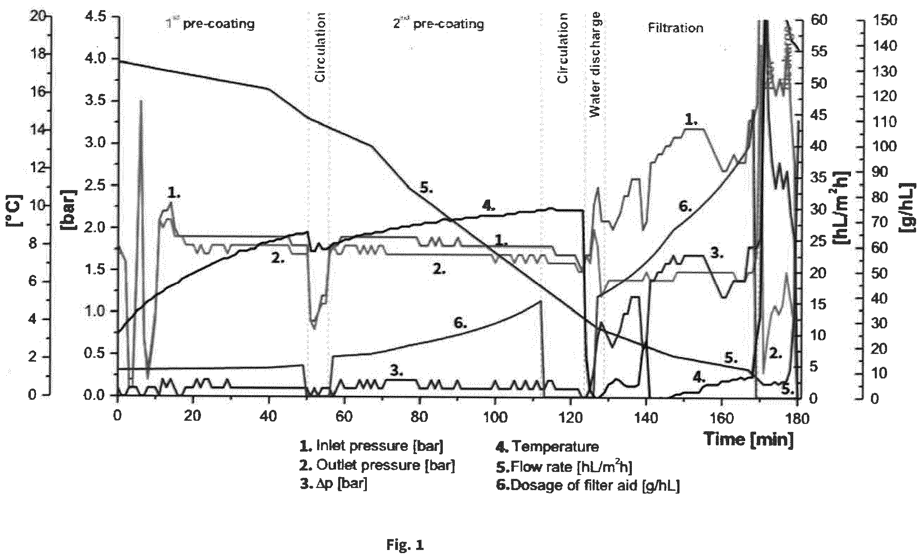

Sofort nach Beginn der Filtration ist ein signifikanter Differenzdruckanstieg zu erkennen (Fig. 1). Die Filtration wurde allerdings nicht mit konstantem Durchfluss, sondern mit dem sich je nach Widerstand selbst einstellenden Durchfluss durchgeführt. Die Kerze war nach der ersten Anschwemmung vollständig geschlossen, die Trübungswerte befinden sich mit 0,9/0,3 EBC 90°C/25°C in einem sehr guten Bereich für die Pilotfilteranlage.

**Tabelle 2**

| **2 Voranschwemmungen** | **Filtration** |
|---|---|
| • Kieselgur Typ 3500: 82g (entspricht 600g/m³) 3 Liter Wasser | • 20min Vorlauf (37,3 kg) |
| | • Laufende Dosage: 100g/hL Kieselgur Typ 1200und Kieselgur Typ 200 (2:1) |
| • Kieselgur Typ 1200 und Kieselgur Typ 200: 82g (2:1) in 3L Wasser | |
| • Kreislaufpumpe: 10%, gedrosselt auf 4,0 L/min (17,6 hL/m²h | • 3 Filtratfässer - Anfang, Mitte, Ende |
| • Dosagepumpe: Frequenz 100%, Vol. 25% | |
| • Dosagedauer: 27min | |
| • Kreislauf: ca. 10min | |

Im Vergleich zu der Kieselgurreferenzfiltration wurde eine Cellulosefaserfiltration an immer der gleichen Filtrox-Anlage mit einer an der modifizierten Cellulose bzw. zellstoffbasierenden Fasern angepassten Dosage durchgeführt.

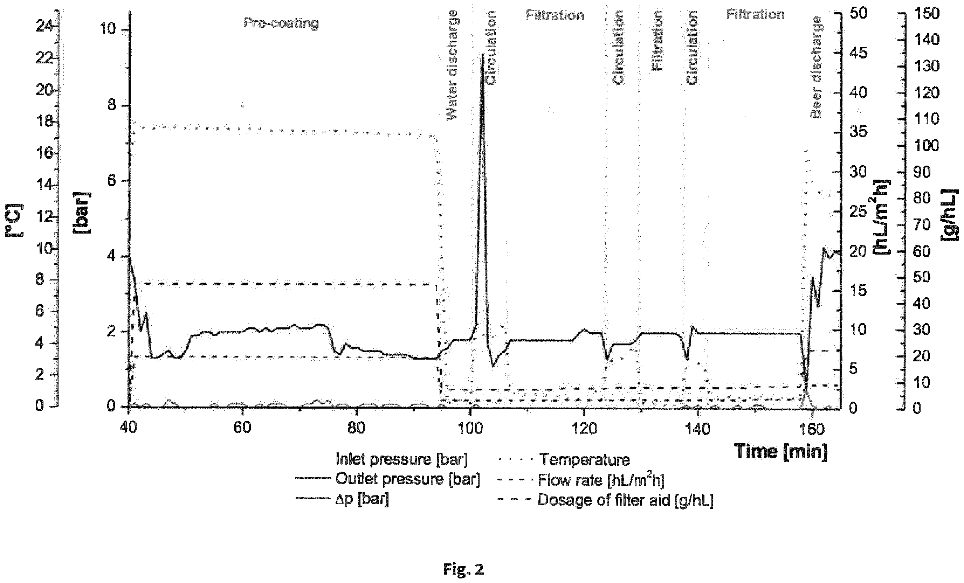

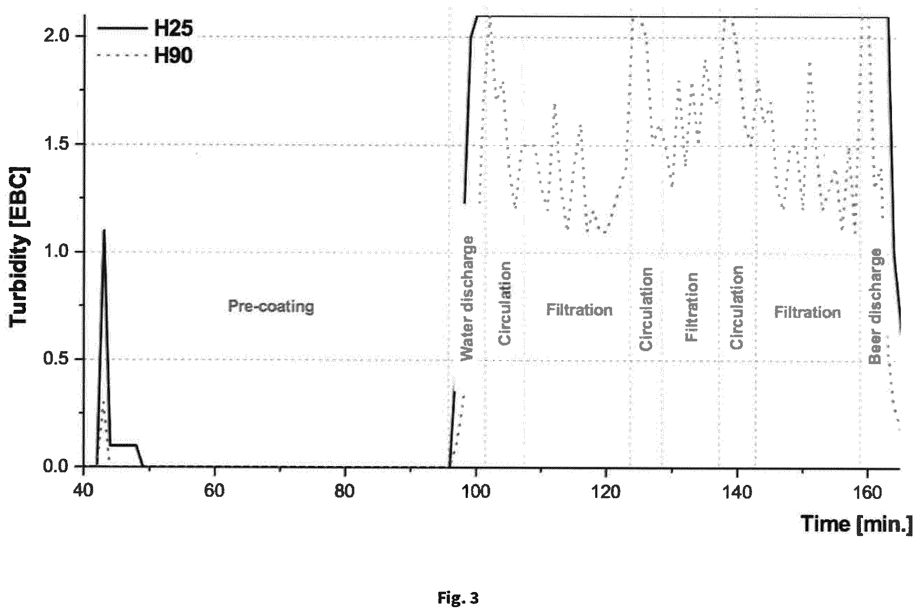

Für die Cellulosefaserfiltration wurden eine Voranschwemmung und die Filtration durchgeführt (Tabelle 3). In Fig. 2 ist der untypische Filtrationsverlauf der Filtration mit einer Rohfaser abgebildet. Sobald der Filter mir Bier gefüllt wurde, befand sich der 25°C Wert außerhalb des Trübungsmessbereiches (>2,1 EBC) (Fig. 3). Die Filtrationsleistung der Cellulose basierenden Faser (Rohfaser) A ist für die Bierfiltration aufgrund der Trübungswerte von 1,4/1,8 EBC 90°C/25°C bei 20°C nicht ausreichend. Bei 0°C liegen die Werte mit 3,5/2,5 EBC 90°C/25°C im sichtbaren Trübungsbereich (>2 EBC).

**Tabelle 3**

| **Voranschwemmungen** | **Filtration** |
|---|---|
| • 1000g Faser/m² in 5 Liter Wasser | • 13kg Vorlauf |
| • Kreislaufpumpe: 10%, gedrosselt auf 11,5 - 12 L/min | • Laufende Dosage: 60g Faser/hL |
| • Dosagepumpe: Frequenz 100%, Vol. 40% | • 2Filtratfässerá 30L - Anfang,Ende |
| • Dosagedauer: ca. 40min | |
| • Kreislauf: ca. 20min | |

Als Ergebnis ist festzuhalten:
- Auf unveränderter Cellulose basierende Filterhilfsmittel bzw. Rohfasern sind auf den gängigen Anlagentechniken zur Filtration grundsätzlich einsetzbar;
- Cellulose basierende Filterhilfsmittel können als nachhaltiges Filterhilfsmittel betrachtet werden, da sie aus nachwachsenden Rohstoffen hergestellt werden;
- Eine Entsorgung der Cellulose basierenden Fasern / Filterhilfsmittel nach der Filtration ist als unproblematisch einzustufen.

Die eingesetzten auf Cellulose basierende Rohfasern bzw. entsprechende Filterhilfsmittel zeigen zwar allgemein gute Eigenschaften eines Filterhilfsmittels bei der Anschwemmung (schnelle Zirkulation und somit schnelle Durchlaufzeit, homogene Verteilung und somit geringen Filterwiderstand) weisen aber eine nicht ausreichende Filtrationsleistung auf, d.h. trotz relativ hoher Schichthöhen wird das Bier mit den bisher eingesetzten Formen, Schnittgröße nicht bzw. nicht dem Anspruch nach glanzfein filtriert. Aufgrund der hohen Trübungswerte müssen die unbehandelten Cellulose basierende Rohfasern mit Trübungen >40 EBC (90°C) und >15 EBC (25°C) als ungeeignet für die Bierfiltration eingestuft werden.

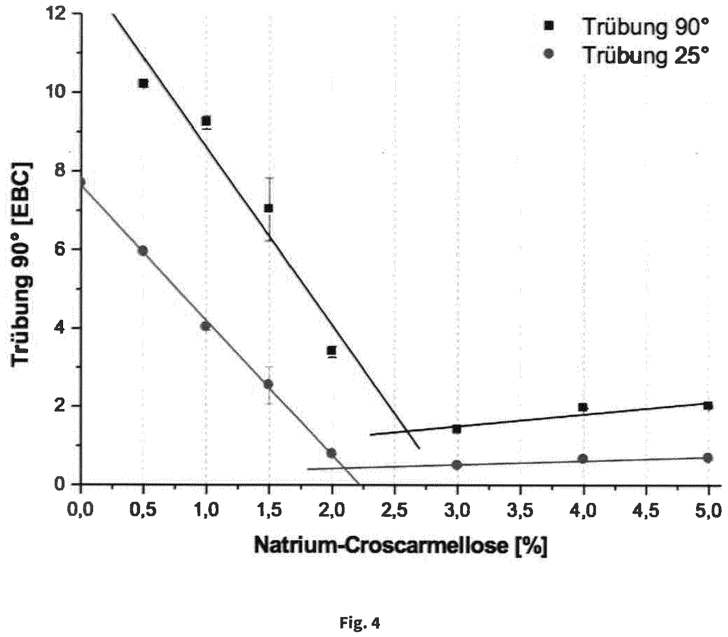

Zur erfindungsgemäßen Aufarbeitung der Cellulose basierenden Rohfasern wurden verschiedene Anteile (0, 0,5, 1, 1,5, 2, 2,5,3,4,5 %) Croscarmellose-Natrium eingesetzt und die veränderten Filtereigenschaften mittels der Stabifix Filtercheck Apparatur überprüft. Die Celluloserohfaser A wurde hierfür mit Croscarmellose-Natrium nach dem erfinderischen Verfahren modifiziert. In Fig. 4 sind die im Laborfiltertest mit dem Stabifix ermittelten Daten dargestellt.

Die Messmethode Stabifix Filtercheck Apparatur basiert auf der MEBAK - Brautechnische Analysenmethoden Würze, Bier, Biermischgetränke, Methodensammlung der Mitteleuropäischen Brautechnischen Analysekommission, Selbstverlag der MEBAK, D-85350 Freising-Weihenstephan, 2012, ISBN 978-3-9805814-6-2, Seiten 271-273, Punkt 2.20.2 und wurde nach entsprechenden weiteren Anforderungen in diesem Verfahren modifiziert.

Die Verwendung von 0,5 Gew.% Croscarmellose-Natrium zur Aufarbeitungführte nur bedingt zu einer Verbesserung der Trübungswerte, jedoch zeigten sich bei einem Einsatz von 2 Gew.% Croscarmellose-Natrium signifikant verbesserte Trübungswerte in Bereichen der Stabifix (Labormassstab) Kieselgurfiltration mit Werten von 3,4 EBC (90°C) bzw. 0,8 EBC (25°C).

Bis zu einem Anteil von ca. 2,5 % Croscarmellose-Natrium zur Aufarbeitung ergibt sich eine weitere signifikante Verbesserung der Filtrationseigenschaften. Mit höheren Anteilen an Croscarmellose-Natrium scheint die Trübung in einem linearen Bereich zu liegen zu kommen.

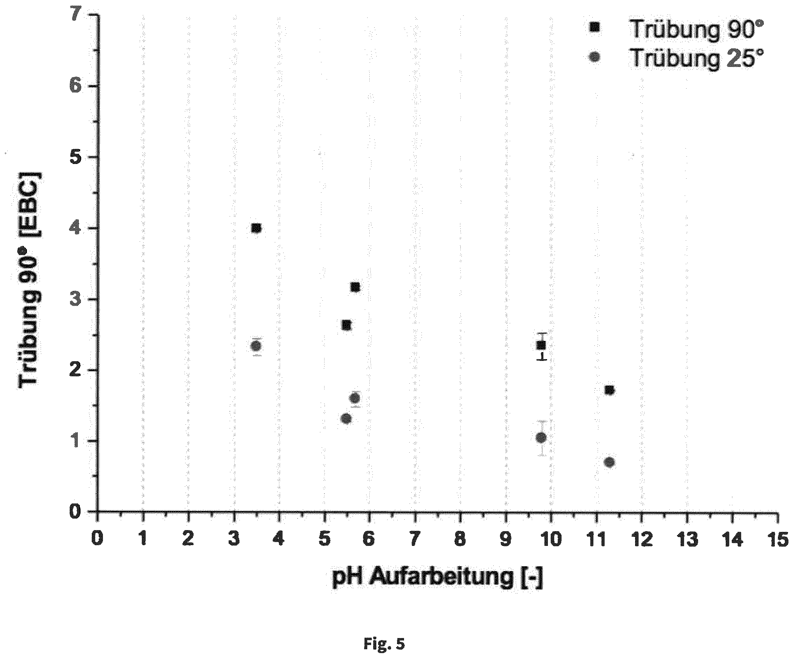

In einem weiteren Vorversuch wurde der Einfluss des pH-Wertes auf die Aufarbeitung ermittelt (Tabelle 4). Die Cellulosefaser A wurde mit Croscarmellose-Natrium bei einer pH-Wert Einstellung im Bereich von pH3 bis pH5, pH-Wert unverändert bzw. in einem pH-Wert Bereich von pH9 bis pH11 nach dem erfinderischen Verfahren modifiziert und eingesetzt. Eine signifikante Verbesserung der Filtrationsleistung konnte erst ab einem pH-Wert im neutralen bis alkalischen Bereich erzielt werden. In Fig. 5 sind die Ergebnisse mit 2 Gew.% Croscarmellose-Natrium im pH-Wert Bereich von pH3 bis pH11,5 dargestellt. Es ist eine weitere deutliche Verbesserung der Filtrationseigenschaften im pH-Wert Bereich >9 erkennbar.

**Tabelle 4: Trübungswerte nach Filtration mit Croscarmellose-Natrium bearbeiteter Cellulosefaser A**

| **Faser** | **Croscarmellose Natrium Zugabe** | **pH-Wert** | **Trübung 90°** | **STABW** | **Trübung 25°** | **STABW** |
|---|---|---|---|---|---|---|
| | % | - | **EBC** | **EBC** | **EBC** | **EBC** |
| Kieselgur | - | - | 2.3 | 0.2 | 0.7 | 0.1 |
| Cellulosefaser A | - | - | 45.3 | 1.5 | 18.1 | 1.7 |
| Cellulosefaser A | 2 | 3.5 | 4.0 | 0.01 | 2.34 | 0.12 |
| Cellulosefaser A | 2 | 5.5 | 2.6 | 0.05 | 1.3 | 0.03 |
| Cellulosefaser A | 2 | 5.7 | 3.2 | 0.03 | 1.6 | 0.11 |
| Cellulosefaser A | 2 | 9.8 | 2.4 | 0.19 | 1.1 | 0.24 |
| Cellulosefaser A | 2 | 11.3 | 1.7 | 0.01 | 0.7 | 0.01 |
| Cellulosefaser A | 3 | 9,3 | 2.2 | 0.06 | 0.7 | 0.03 |
| Cellulosefaser A | 3 | 11,1 | 1.5 | 0.01 | 0.6 | 0.04 |

In einem nachfolgenden Versuch mit der Filtrox-Anlage wurde eine nach dem erfinderischen Verfahren modifizierte Cellulosefaser basierend auf Faser A mit einem Anteil an 2 Gew.% Croscarmellose-Natrium aufgearbeitet. Im Vergleich zu der Kieselgurreferenzfiltration wurde die Filtration mit den modifizierten Cellulosefasern an der gleichen Filtrox-Anlage mit einer an die Cellulose basierende Rohfaser angepassten Dosage durchgeführt. Für die Faserfiltration mit der modifizierten Cellulosefaser wurde eine Voranschwemmung und die Filtration durchgeführt (Tabelle 5).

**Tabelle 5**

| **Voranschwemmungen** | **Filtration** |
|---|---|
| • 1000g Faser/m² in 5 Liter Wasser | • 13kg Vorlauf, dann 5min Kreislauf |
| • Kreislaufpumpe: 10%, gedrosselt auf 11,5 - 12 L/min | • Laufende Dosage: 60g modifizierte Faser/hL |
| | • 2 Filtratfässer á 30 L - Anfang, Ende |
| • Dosagepumpe: Frequenz 100%, Vol. 40% | • Schichthöhe Voranschwemmung. |
| • Dosagedauer: ca. 40min | • Schichthöhe Filtrationsende 12,5 ±0,3mm |
| • Kreislauf: ca. 20min | • Trübung EBC 90°C/25°C; 0,9/0,4 |

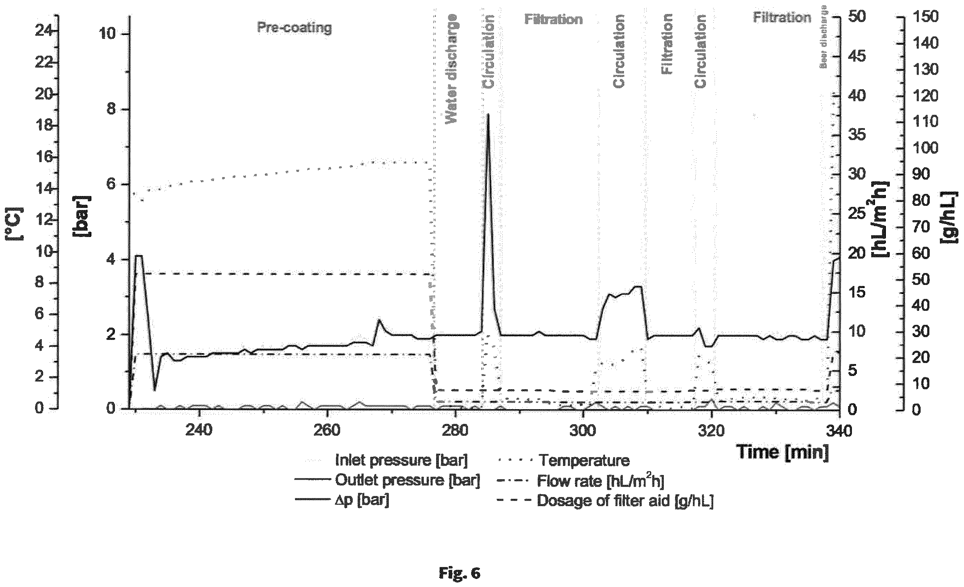

Der Filtrationsversuch mit Croscarmellose-Natrium modifizierter Cellulose basierender Faser A zeigt im Gegensatz zur Kieselgurfiltration (Fig. 1) einen untypischen Filtrationsverlauf (Fig. 6), allerdings vergleichbar mit der Rohfaser A Filtration (Fig. 2). Der sich dabei darstellende untypische Filtrationsverlauf zeigt sich in dem sehr geringen bis gar nicht messbaren Differenzdruck während der Filtration. Daraus lässt sich schlussfolgern, dass somit ein Teil des Filtrationseffekts auf Absorption basiert. Bei der Kieselgurfiltration ist der Differenzdruck der wichtigste Einflussfaktor, wobei es natürlich auch hier in geringem Maße Absorption gibt.

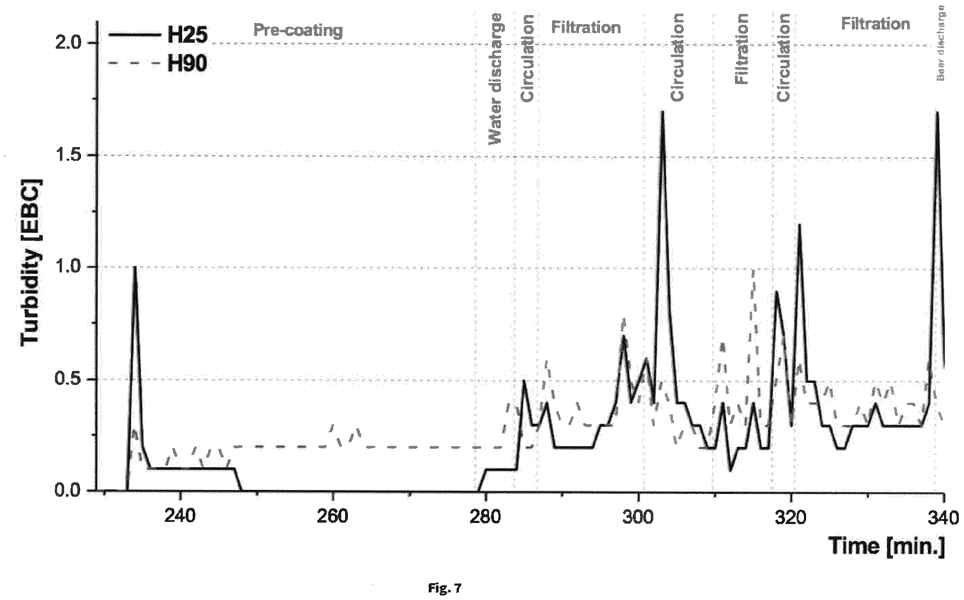

Der geringe Differenzdruck bei Verwendung von Croscarmellose-Natrium modifizierter Cellulosefaser ist sehr vorteilhaft, da dadurch länger und damit mehr filtriert werden kann. Bei der Kieselgurfiltration muss die Filtration aufgrund des stetig steigenden Differenzdruckes während der Filtration, bei einem zulässigen Höchstdruck von 5-6 bar abgebrochen werden. Dies resultiert aus der stetig steigenden Filterschicht aufgrund der laufenden Kieselgurdosage, die eine gleichbleibende Filtrationsleistung bei steigendem Eingangsdruck garantiert. Bei der Filtration mit Croscarmellose-Natrium modifizierten Cellulosefasern ist durch den geringen bzw. kaum messbaren Differenzdruckanstieg eine deutlich längere und damit wirtschaftlichere Filtration möglich. Die Trübungswerte (Fig. 7) sind im Vergleich zur Filtration der Celluloserohfaser (Fig. 3) deutlich niedriger und befinden sich durchgehend im Messbereich (<2,1 EBC). Auch die Trübungsmessungen im Labor bei 20°C liegen mit 0,9 / 0,4 EBC (90° / 25°) deutlich im Bereich für ein glanzfeines Bier. Zudem sind diese Werte im selben Bereich wie die der Kieselgurfiltration an der gleichen Filtrox-Pilotanlage (0,9 / 0,4 EBC 90°/25°). Auch bei 0°C konnten durch den Einsatz der modifizierten Cellulose basierenden Faser gute Trübungswerte von 1,1 / 0,5 EBC (90° / 25°) gemessen werden, die im nicht sichtbaren Bereich liegen. Somit ist eine signifikante Reduktion auf 1/3 des Trübungswertes verglichen mit der nicht aufgearbeiteten Cellulose basierenden Faserzu erreichen.

Besonders zu erwähnen ist, dass die Croscarmellose-Natrium bzw. die modifizierten Cellulose basierenden Fasern Proteine binden können. Zwischen der laufenden Dosage und dem Erreichen des Filterkuchens kommt es leicht zu Ausfällungen bzw. Flocken im Bier. Diese Ausfällungen bzw. Flocken werden durch die mit Croscarmellose-Natrium modifizierten Cellulosefasern gebunden. Somit erfolgt durch die Filtration mit der nach dem erfinderischen Verfahren modifizierten Cellulosefasern eine eiweißseitige Trübungsstabilisierung im Bier. In Tabelle 6 sind die Ergebnisse aus der Bieranalytik des Unfiltrates, sowie der filtrierten Biere aus den Versuchen mit 2 Gew.% Croscarmellose-Natrium und der Celluloserohfaser A gegenübergestellt.

**Tabelle 6: Ergebnisse Standard Bieranalytik**

| | | **Unfiltrat 1** | **Cellulose-faser A Anfang** | **Cellulose-faser A Ende** | **2% NCM Cellulosefaser A Anfang** | **2% NCM Cellulosefaser A Ende** |
|---|---|---|---|---|---|---|
| Stammwürze | °P | 12,1 | 11,5 | 11,7 | 11,5 | 11,5 |
| Extrakt scheinbar | % w/w | 2,12 | 2,06 | 2,10 | 2,06 | 2,10 |
| Extrakt wirklich | % w/w | 4,04 | 3,89 | 3,95 | 3,88 | 3,95 |
| Alkohol | % v/v | 5,31 | 5,02 | 5,09 | 5,01 | 5,09 |
| Farbe | EBC | 6,6 | 6,4 | 6,5 | 6,1 | 6,3 |
| pH-Wert | - | 4,42 | 4,41 | 4,40 | 4,41 | 4,40 |
| Trübung 0°C 90° | EBC | >100 | 3.46 | 3.4 | 1.12 | 1.14 |
| Trübung 0°C 25° | EBC | >100 | 2.45 | 2.26 | 0.53 | 0.53 |
| Trübung 20°C 90° | EBC | >100 | 1.37 | 1.19 | 0.90 | 0.88 |
| Trübung 20°C 25° | EBC | >100 | 1.42 | 1.09 | 0.43 | 0.38 |

In einem weiteren Versuch mit einer Filtrox-Anlage wurde eine nach dem erfinderischen Verfahren modifizierte Cellulosefaser Faser A mit einem Anteil von 3 Gew.% Croscarmellose-Natrium und eine modifizierte Cellulosefaser Faser B mit einem Anteil von 3 Gew.% Croscarmellose-Natrium aufgearbeitet. Im Vergleich zu der Kieselgurreferenzfiltration (Tabelle 7) wurde die Filtration mit den modifizierten Cellulosefasern an der gleichen Filtrox-Pilotanlage mit einer an die modifizierte Celluloserohfaser angepassten Dosage (Tabelle 8) durchgeführt. Für die Cellulosefaserfiltration (Faser A) wurden eine Voranschwemmung und die Filtration durchgeführt, für die Kombination A + B (modifizierte Cellulosefaser A und B, je mit 3 Gew.% Croscarmellose-Natrium bei pH11) wurden eine erste und eine zweite Voranschwemmung und die Filtration bei laufender Dosage durchgeführt (Tabelle 9).

**Tabelle 7**

| **2 Voranschwemmungen** | **Filtration** |
|---|---|
| • Kieselgur Typ 3500: 82g (entspricht 600g/m³) | • 20min Vorlauf (37,3 kg) |
| 3 Liter Wasser | • Laufende Dosage: 100g/hL Kieselgur Typ 1200 und KieselgurTyp 200 (2:1) |
| • Kieselgur Typ 1200 und Kieselgur Typ 200: 82g (1:1) in 3L Wasser | • 3 Filtratfässer - Anfang, Ende |
| • Kreislaufpumpe: 10%, gedrosselt auf 4,0 L/min (17,6 hL/m²h | |
| • Dosagepumpe: Frequenz 100%, Vol. 25% | |
| • Dosagedauer: 27min | |
| • Kreislauf: ca. 10min | |

**Tabelle 8**

| **Voranschwemmungen** | **Filtration** |
|---|---|
| • 1000g/m² modifizierte Faser in 5 Liter Wasser | • 13kg Vorlauf, dann 5min Kreislauf |
| • Kreislaufpumpe: 10%, gedrosselt auf 11,5 - 12 L/min | • Laufende Dosage: 60g modifizierte Faser/hL |
| • Dosagepumpe: Frequenz 100%, Vol. 40% | • 2 Filtratfässer á 30 L - Anfang, Ende |
| • Dosagedauer: ca. 40min | |
| • Kreislauf: ca. 20min | |

**Tabelle 9**

| **2 Voranschwemmungen** | **Filtration** |
|---|---|
| • 500g/m² modifizierte Faser in 5 Liter Wasser | • 13kg Vorlauf, dann 5min Kreislauf |
| • Kreislaufpumpe: 10%, gedrosselt auf 11,5 - 12 L/min | • Laufende Dosage: 60g modifizierte Faser/hL |
| • Dosagepumpe: Frequenz 100%, Vol. 40% | • 2 Filtratfässer á 30 L - Anfang, Ende |
| • Dosagedauer: ca. 40min | |
| • Kreislauf: ca. 20min | |

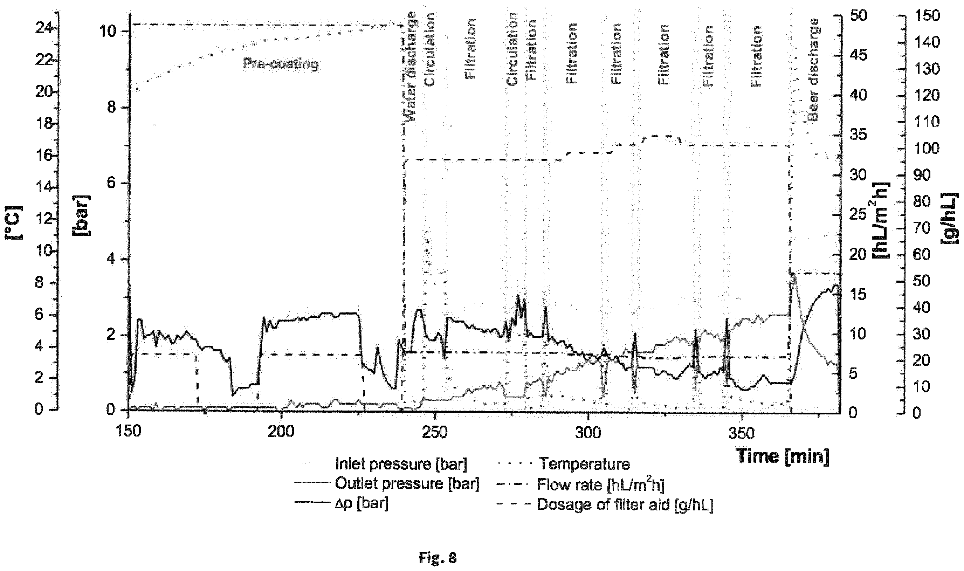

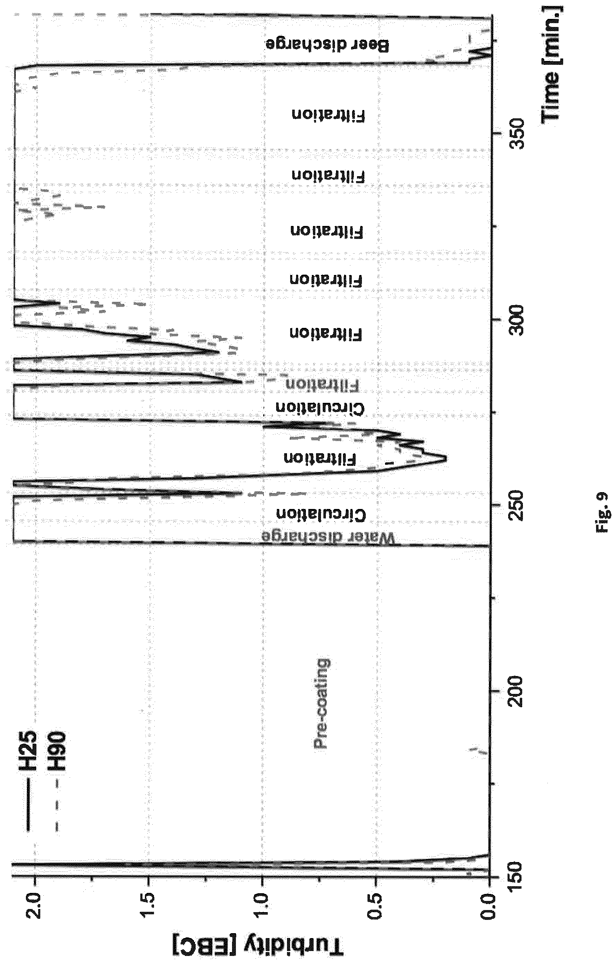

Deutliche Vorzüge der Filtration mit modifizierten Cellulosefasern sind erkennbar aus den Eckdaten der gezeigten Figuren. So ist in Fig. 8 der Filtrationsverlauf einer normalen Kieselgurfiltration dargestellt. Wie bei einer Kieselgurfiltration üblich, steigt der Differenzdruck nahezu linear an. Die Trübungswerte aus der Inline-Messung (Fig. 9) sind nicht direkt im Bereich einer industriell üblichen Kieselgurfiltration, wobei die gemessenen Werte in der Pilotanlage immer etwas erhöht sind.

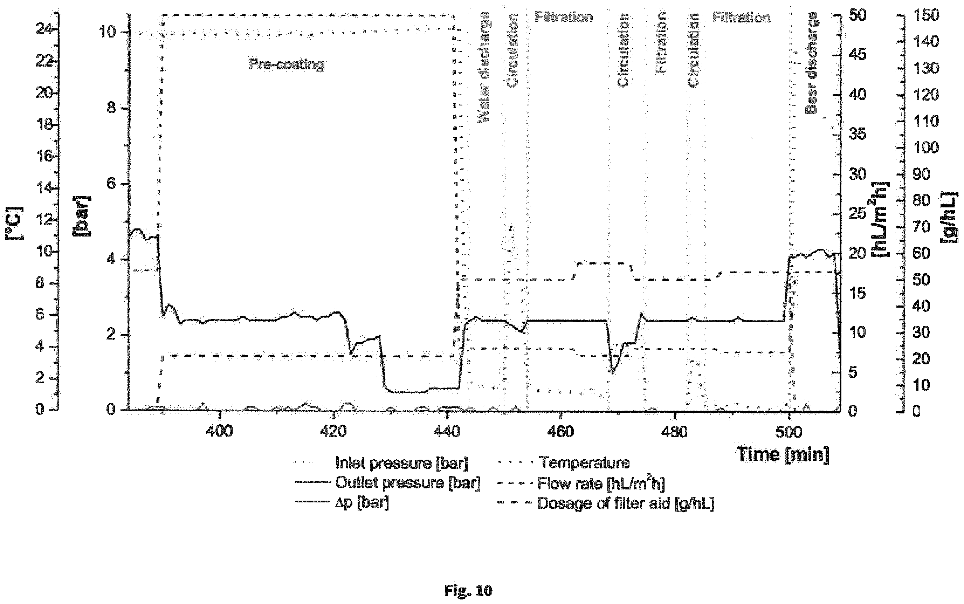

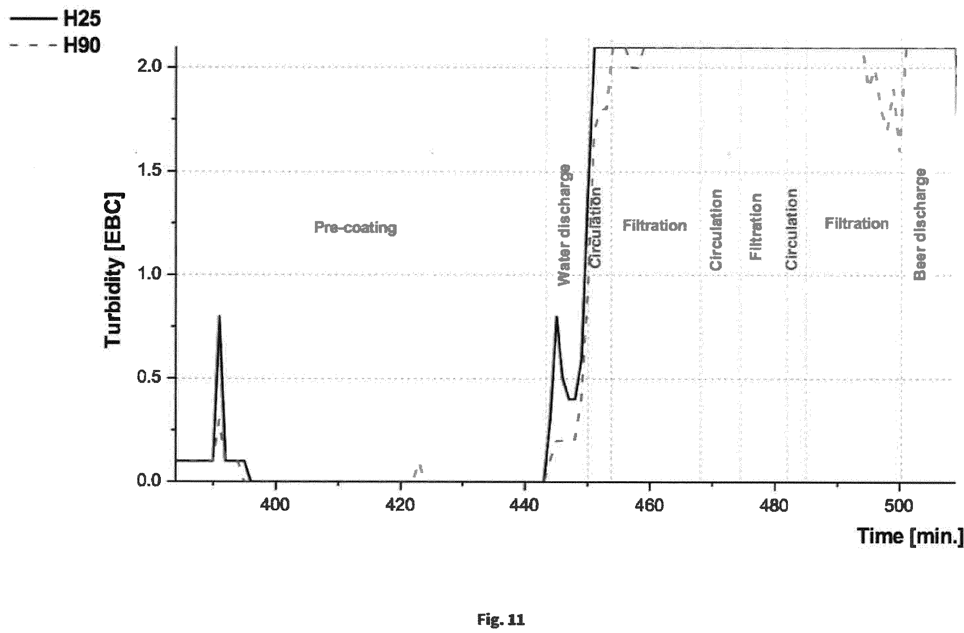

Bei der Rohfaserfiltration (Cellulosefaser A) ist wieder ein sehr untypischer Filtrationsverlauf (Fig. 10) zu erkennen, eine Druckdifferenz ist nicht messbar. Die Trübungswerte sind sehr hoch und dauerhaft außerhalb des Messbereiches (Fig. 11).

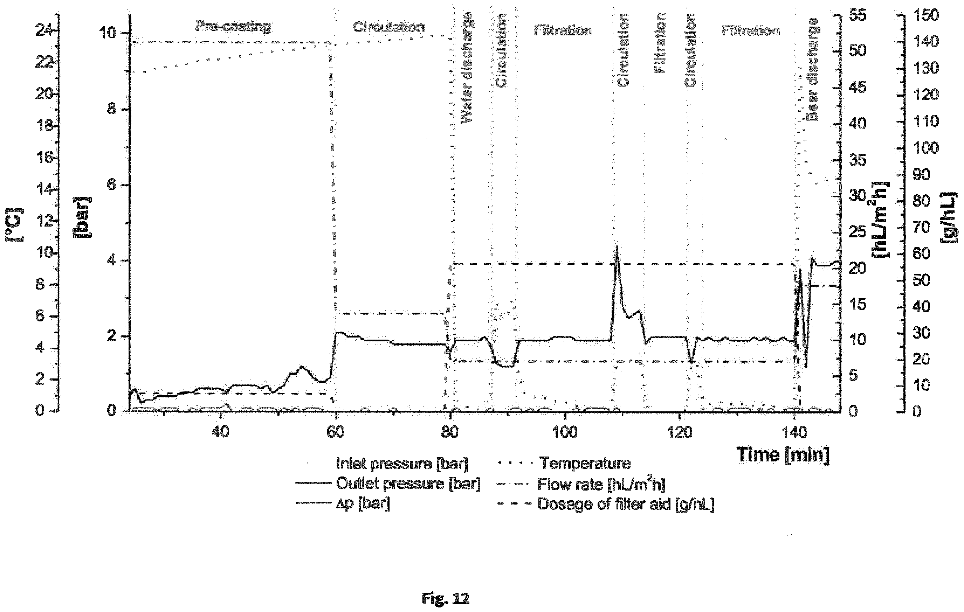

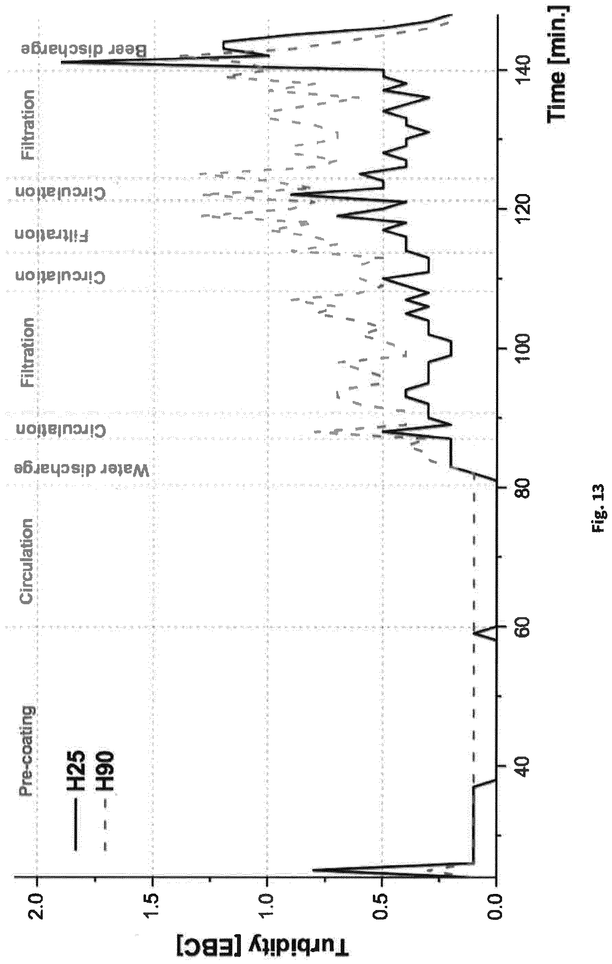

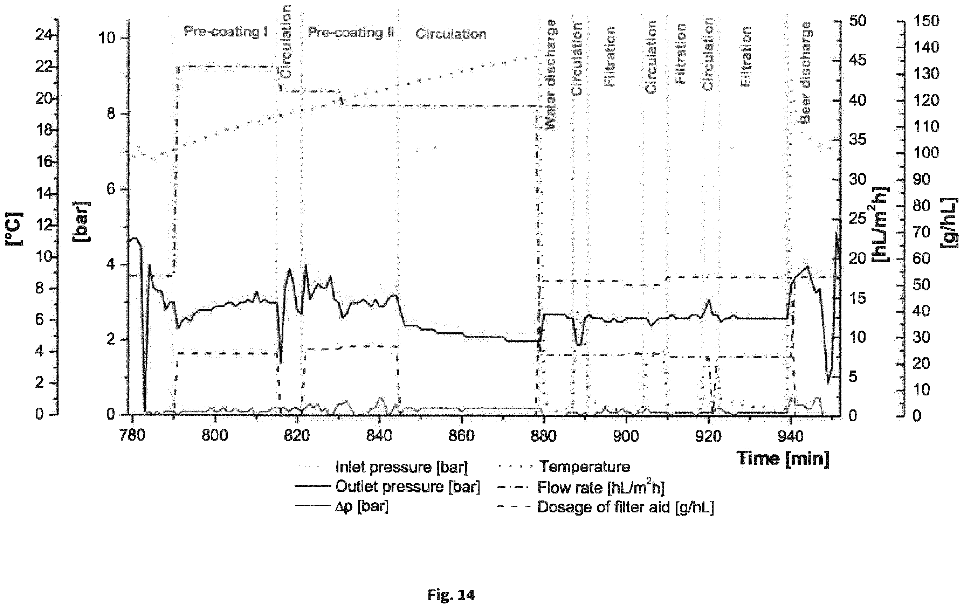

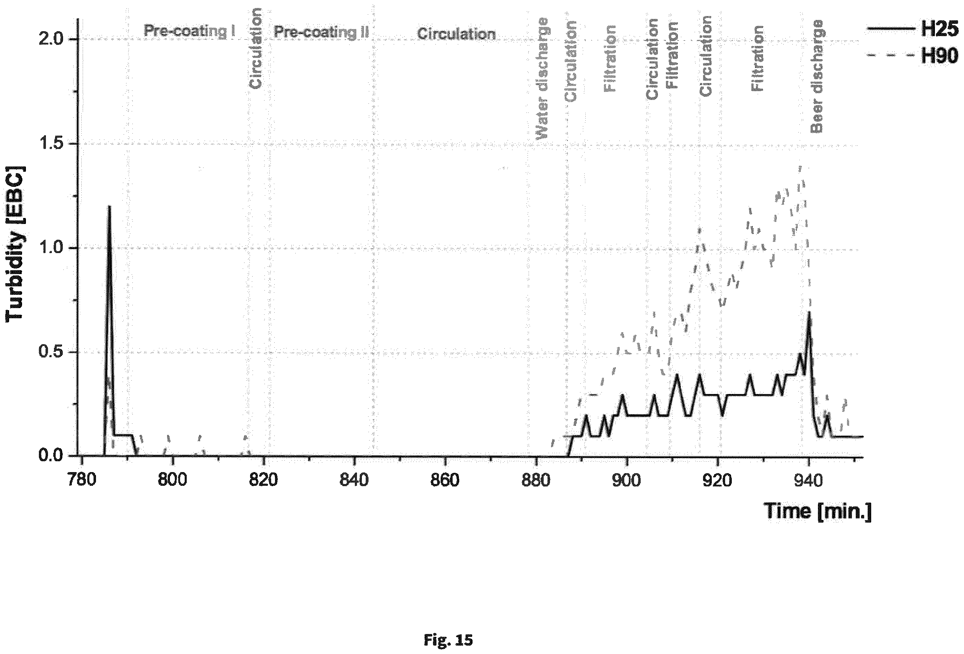

Analog zur Rohfaser A ist ein ähnlich untypischer Filtrationsverlauf bei der Filtration mit modifizierter Cellulosefaser A (modifiziert mit 3 % Croscarmellose-Natrium bei pH 11) zu sehen (Fig. 12). Die Trübungswerte (Fig. 13) sind über die gesamte Filtrationsdauer inline messbar und steigen über die Filtration nur leicht an. Auch derVersuch mit 2 Anschwemmungen (Cellulosefaser A mit 3 % Croscarmellose-Natrium, pH 11 und Cellulosefaser B mit 3 % Croscarmellose-Natrium, pH 11) zeigt nahezu keine Druckdifferenz (maximal 0,2 bar) über den Filtrationsverlauf (Fig. 14). Hierbei tritt ein stärkerer, linearerTrübungsanstieg (Fig. 15) während der Filtration auf.

In Tabelle 10 sind die erzielten Ergebnisse aus der Bieranalytik des Unfiltrates sowie der filtrierten Biere aus den Versuchen mit Kieselgur, Celluloserohfaser A, Cellulosefaser A mit 3 Gew.% Croscarmellose-Natrium und pH-Wert pH11 und Cellulosefaser A/ Cellulosefaser B mit je 3 Gew.% Croscarmellose-Natrium und pH-Wert pH11 dargestellt. Die Stammwürzegehalte zeigen im Vergleich zum Unfiltrat eine leichte Verdünnung, die verfahrenstechnisch bedingt ist. Diese Verdünnung ist jedoch in allen durchgeführten Versuchen vergleichbar, was sich auch in den Extraktwerten und im einzelnen Alkoholgehalt wiederspiegelt. Die Farbwerte zeigen bei Kieselgur sowie bei der modifizierten Cellulosefaserfiltration eine natürliche Abnahme durch den Filtrationsprozess. Der pH-Wert ist in allen Bieren vergleichbar, eine leichte SO₂-Abnahme ist durch die leichte Verdünnung sowie einen geringen Sauerstoffeintrag während der Filtration zu erklären. Die Polyphenolgehalte sind im Vergleich zur Kieselgur bei Einsatz der modifizierten Cellulosefaser A signifikant niedriger. Dies hat einen positiven Einfluss auf die kolloidale Bierstabilität, d.h. die Trübungsneigung während der Lagerung / Alterung wird gesenkt. Auch bei den freien Aminostickstoffen ist im Vergleich zur Kieselgur ein stärkerer Austrag durch die modifizierte Cellulosefaser zu erkennen. Die Trübungswerte entsprechen insgesamt noch nicht den Richtwerten für ein glanzfeines Bier, jedoch ist erneut eine signifikante Verbesserung bei Einsatz von modifizierter Cellulosefaser (Kieselgur 2,2 / 2,5 EBC (90° / 25°), Celluloserohfaser 3,1 / 3,9 EBC (90° / 25°), modifizierter Cellulosefaser A 1,5 / 1,3 EBC (90° / 25°) zu sehen. Die Trübungswerte der Filtration mit modifizierter Cellulosefaser liegen jedoch unterhalb der Referenzkieselgurfiltration bei gleicher Pilotanlage. D.h. man kann durch die Verwendung von modifizierten Cellulosefasern im Vergleich zur Kieselgur ein mindestens vergleichbar blankeres Bier erhalten. Durch eine weitere Anpassung des Prozesses ist hier noch eine Verbesserung zu erwarten. Bei kombiniertem Einsatz von modifizierter Cellulosefaser A und modifizierter Cellulosefaser B ist am Filtrationsanfang eine weitere signifikante Steigerung in der Filtrationsleistung (niedrigere Trübungswerte, 1,0 / 0,8 EBC (90° / 25°)) zu erkennen. Auch im kalten (0 °C) werden durch den Einsatz modifizierter Cellulosefasern mindestens gleiche Werte wie bei der Kieselgurfiltration erreicht. Eine Anpassung der Filtrationsparameter (Anschwemmmenge, laufende Dosage, Croscarmellose-Anteil, Fasergeometrie) ist bei Einsatz von modifizierten Cellulosefasern je nach Qualität des Unfiltrates möglich, so dass auch schwer zu filtrierende Biere ohne einen Anstieg in der Druckdifferenz glanzfein filtriert werden können.

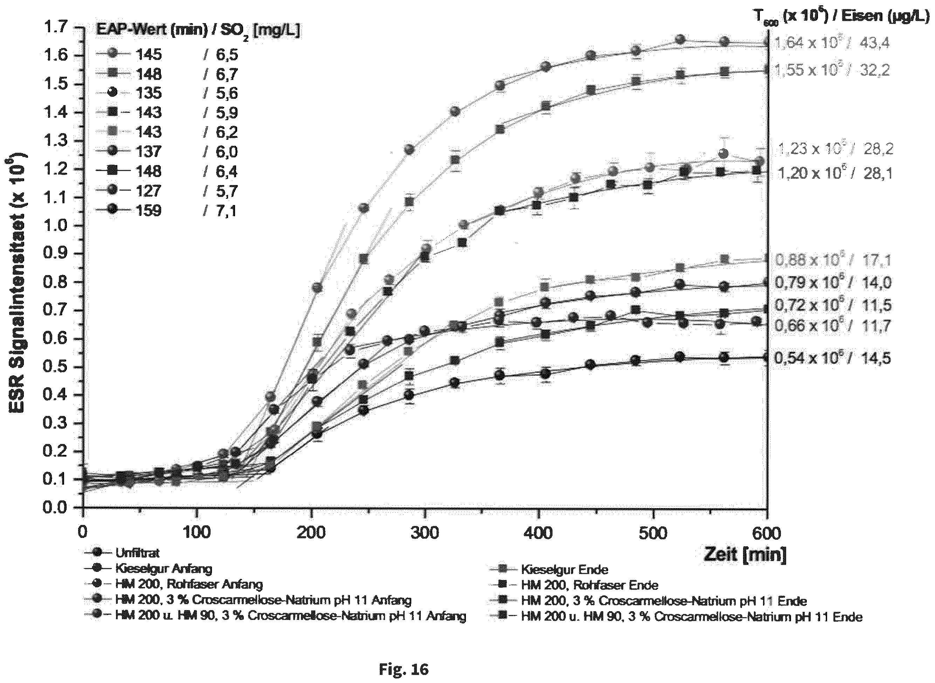

In Fig. 16 ist die ESR-Messung (Elektronenspinresonanz Messung) von Bieren zur Untersuchung der Filtrationseinflüsse auf die oxidative Bierstabilität dargestellt. Die Ergebnisse der EAP-Bestimmung (Endogenes Antioxidatives Potential) verdeutlichen den grundsätzlichen Vorteil einer Cellulosefaserfiltration gegenüber der Kieselgurfiltration, da im Vergleich zur Kieselgur signifikant weniger Eisen in das Bier eingetragen wird. Dadurch wird die Sauerstoffaktivierung durch Eisenionen herabgesetzt und es entstehen weniger Radikale über das Fenton-Reaktionssytem. In Folge wird der filtrationsbedingte Verlust an endogenem antioxidativen Potential des Bieres reduziert und die Geschmacksstabilität über die Lagerzeit verlängert. Dies trifft insbesondere auf die Croscarmellose-Natrium modifizierte Cellulosefaser zu. Mit Celluloserohfasern ist ein T₆₀₀-Wert mit ca. der halben ESR-Signalintensität der Kieselgur zu erreichen, die Radikalgenerierung ist entsprechend stark vermindert. Zudem ist ein Unterschied zwischen dem Anfang und dem Ende der Rohfaserfiltration zu erkennen, da während des Filtrationsprozesses das Eisen aus dem Filterkuchen ausgewaschen wird (Tabelle 10). Bei Einsatz von modifizierten Cellulosefasern mit Croscarmellose-Natrium ist die ESR-Signalintensität nahezu ideal auf dem Niveau des Unfiltrates, wodurch der negative Effekt einer Kieselgurfiltration nahezu vollständig umgangen werden kann. Die Erklärung ist dadurch gegeben, dass durch die erfindungsgemäße Aufarbeitung der Cellulosefaser A bereits ein Großteil des Eisens aus der Cellulosefaser entfernt wird und somit nicht mehr in das Bier gelangen kann. Der leicht erhöhte ESR-Wert lässt sich durch einen geringen Sauerstoffeintrag während der Filtration erklären.

Bei Einsatz von aufgearbeiteter Cellulosefaser B gibt es technisch bedingt einen höheren Eiseneintrag in das Bier aufgrund des geringeren Eisenaustrages bei der Faseraufbereitung. Dieser wird signifikant, sobald die Kapazität des darunterliegenden Filterkuchens aus modifizierterCellulosefaser A erschöpft ist. Hier steigt dann auch die Trübung an. Unabhängig davon lässt sich auch bei der modifizierten Cellulosefaser B durch Anpassung der erfindungsgemäßen Aufarbeitung der Eiseneintrag weiter minimieren.

Die EAP-Bestimmung mittels Elektronenspinresonanz Spektroskopie wurde nach der MEBAK - Brautechnische Analysenmethoden Würze Bier Biermischgetränke, Methodensammlung der Mitteleuropäischen Brautechnischen Analysenkommission, Selbstverlag der MEBAK, D-85350 Freising-Weihenstephan, 2012, ISBN 978-3-9805814-6-2, Seiten 207-218, Punkt 2.15.3 durchgeführt.

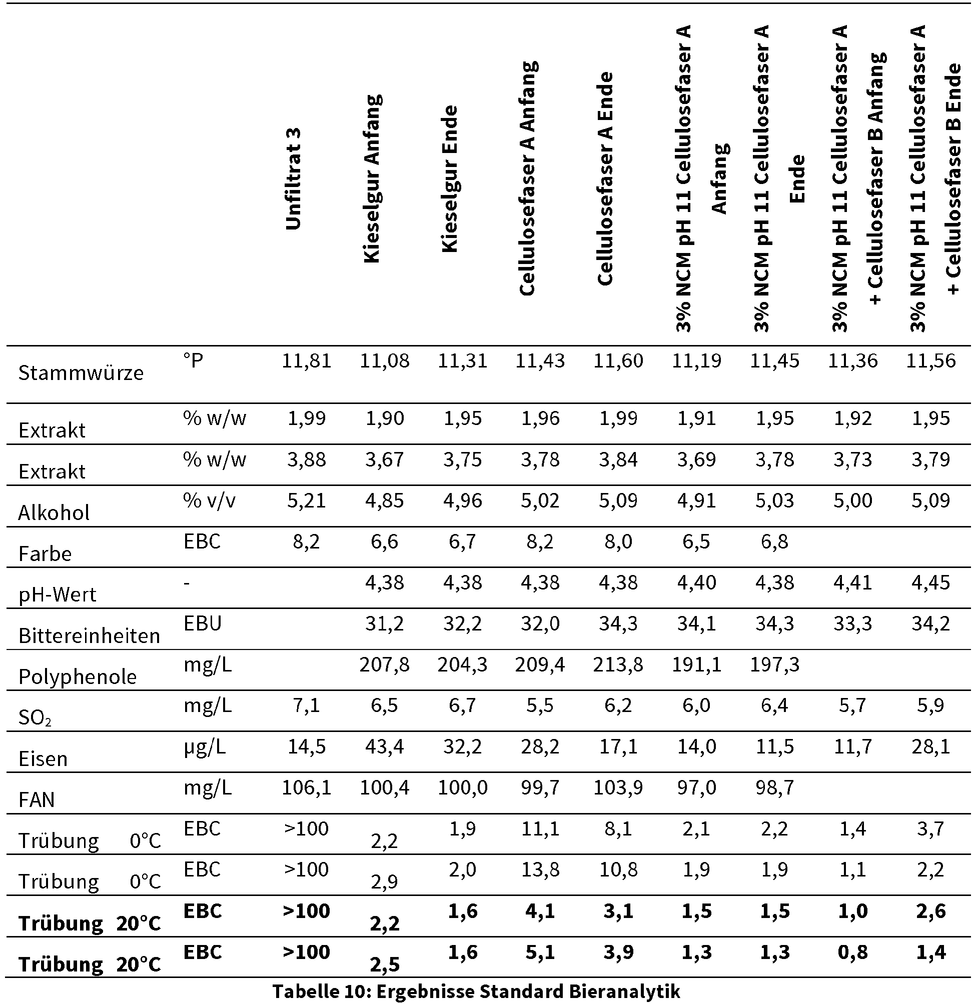

## Patentansprüche

1. Verfahren zur Herstellung von modifizierten Cellulosefasern für die künstliche Klärung von trübungsaktiven Substanzen aus Flüssigkeiten mit folgenden Schritten:
• Einwiegen einer Fasermischung bestehend aus
80 - 99,9 Gew.% Cellulosefasern,
0,1 - 10 Gew.% Croscarmellose-Natrium und
0 - 10 Gew.% eines oder mehrerer Additive;
• Quellen und Aufbereiten der Fasermischung im neutral bis alkalischen Milieu;
• Kochen der Fasermischung;
• Waschen;
• Isolieren der modifizierten Fasern.

2. Verfahren nach Anspruch 1, wobei die Fasermischungzur Herstellung von modifizierten Cellulosefasern homogenisiert wird.

3. Verfahren nach Anspruch 2, wobei die Cellulosefasern ausgewählt sind aus der Gruppe der Fasern enthaltend Cellulose, zellstoffbasierende Fasern, Fasern aus Getreide, aus Holz, aus Bambus, aus Gehölzschnitte, aus Gehölzabfälle und Mischungen derselben und wobei die Fasern eine mittlere Faserlänge im Bereich von <1 bis 500µm aufweisen.

4. Verfahren nach Anspruch 2 oder 3, wobei die Fasermischung gemäß Schritt (a) 92 - 99 Gew.% Cellulosefasern, 1 - 8 Gew.% Croscarmellose-Natrium und 0 - 4 Gew.% eines oder mehrerer Additive aufweist.

5. Verfahren nach Anspruch 3, wobei die Fasermischung gemäß Schritt (a) ausgewählt ist aus einer Zusammensetzung bestehend aus 90 - 99,9 Gew.% Cellulosefasern, 0,1 - 5 Gew.% Croscarmellose-Natrium und 0 - 5 Gew.% eines oder mehrerer Additive, oder aus 90 - 99 Gew.% Cellulosefasern und 1 - 5 Gew.% Croscarmellose-Natrium und 0 - 5 Gew.% eines oder mehrerer Additive.

6. Verfahren nach Anspruch 1 bis 4, wobei ein oder mehrere Additive ausgewählt sind aus der Gruppe der Additive bestehend aus Pektin, Carrageen, Hausenblase, Hydrokolliden, Stärke, Gallotanninen, Kieselsol, Silicagel, Polyvinylpyrrolidon und Polyvinylpolypyrrolidon sowie Mischungen derselben.

7. Verfahren nach Anspruch 1 bis 4, wobei zum Aufbereiten der Fasermischung der pH-Wert mit wenigstens einer Säure und/oder mit wenigstens einer Base auf einen Wert zwischen pH6 und pH13 eingestellt wird.

8. Verfahren nach Anspruch 1 bis 7, wobei zum Fertigstellen der Fasermischung die feuchte Masse bis zu einem Restwassergehalt von 2 - 10 Gew.% getrocknet wird.

9. Verfahren nach Anspruch 1 bis 8, wobei die fertiggestellte Fasermischung in einem weiteren Verfahrensschritt als feuchte oder getrocknete Masse zu Filterhilfsmitteln und/oder Filterplatten verarbeitet wird.

10. Modifizierte Cellulosefasern für die künstliche Klärung von trübungsaktiven Substanzen aus einer Flüssigkeit bestehend aus:
a) 80 - 99,9 Gew.% eines Hauptfunktionsstoff auf der Basis von Cellulosefasern;
b) 0,1 - 10 Gew.% eines Hilfsfunktionsstoff auf Basis von Carboxymethylcellulosen und
c) 0-10 Gew.% eines oder mehrerer Additive, wobei
die modifizierten Cellulosefasern mit dem Verfahren gemäß einem der Ansprüche 1 bis 9 hergestellt werden.

11. Modifizierte Cellulosefasern nach Anspruch 10, wobei die Carboxymethylcellulose als wasserunlösliche Croscarmellose-Natrium eingesetzt wird.

12. Modifizierte Cellulosefasern nach einem der Ansprüche 10 und 11, wobei die getrockneten oder isolierten modifizierten Cellulosefasern bei erneutem Einbringen in Wasser einen pH-Wert im Bereich von pH5 bis pH8 aufweisen.

13. Verwendung einer oder mehrerer modifizierter Cellulosefasern gemäß Anspruch 10 bis 12 für die Verwendung als ein Filterhilfsmittel.

14. Verwendung nach Anspruch 13 zur Herrichtung des Filterhilfsmittels als AnschwemmKerzenfilter, Anschwemm-Schichtenfilter, Anschwemm-Scheibenfilter, Anschwemm-Blattfilter oder Platten-Schichtenfilter.

15. Verfahren zur künstlichen Klärung von trüben Flüssigkeiten, **dadurch gekennzeichnet, dass** ein oder mehrere nach Anspruch 13 oder 14 verwendete Filterhilfsmittel eingesetzt werden.

## Claims

1. A method for producing modified cellulose fibers for artificial clarification of turbidity-causing substances from liquids, comprising the following steps:
• weighing in a fiber mixture consisting of
80 - 99.9 wt% cellulose fibers,
0.1 - 10 wt% sodium croscarmellose and
0 - 10 wt% of one or more additives;
• swelling and workup of the fiber mixture in a neutral to alkaline medium;
• cooking the fiber mixture;
• washing;
• isolating the modified fibers.

2. The method according to claim 1, wherein the fiber mixture for production of modified cellulose fibers is homogenized.

3. The method according to claim 2, wherein the cellulose fibers are selected from the group of fibers containing cellulose, cellulose-based fibers, fibers from grains, from wood, from bamboo, from wood chips, from wood wastes and mixtures of same, and wherein the fibers have an average fiber length in the range of < 1 to 500 µm.

4. The method according to claim 2 or 3, wherein the fiber mixture according to step (a) comprises 92 - 99 wt% cellulose fibers, 1 - 8 wt% sodium croscarmellose and 0 - 4 wt% of one or more additives.

5. The method according to claim 3, wherein the fiber mixture according to step (a) is selected from a composition consisting of 90 - 99.9 wt% cellulose fibers, 0.1 - 5 wt% sodium croscarmellose and 0 - 5 wt% of one or more additives or from 90 - 99 wt% cellulose fibers and 1 -5 wt% sodium croscarmellose and 0 -5wt% of one or more additives.

6. The method according to claims 1 to 4, wherein one or more additives are selected from the group of additives consisting of pectin, carrageenan, isinglass, hydrocolloids, starch, gallotannins, silica sol, silica gel, polyvinylpyrrolidone and polyvinylpolypyrrolidone as well as mixtures of same.

7. The method according to claims 1 to 4, wherein for workup of the fiber mixture, the pH is adjusted with at least one acid and/or with at least one base to a value between pH 6 and pH 13.

8. The method according to claims 1 to 7, wherein for completion of the fiber mixture, the moist mass is dried to a residual water content of 2 - 10 wt%.

9. The method according to claims 1 to 8, wherein the finished fiber mixture is processed in an additional method step as moist or dried mass to form filter aids and/or filter sheets.

10. Modified cellulose fibers for artificial clarification of turbidity-causing substances from a liquid consisting of:
a) 80 - 99.9 wt% of a main function substance based on cellulose fibers;
b) 0.1 - 10 wt% of an auxiliary function substance based on carboxymethyl celluloses and
c) 0 - 10 wt% of one or more additives, wherein
the modified cellulose fibers are produced by the method according to any one of claims 1 to 9.

11. The modified cellulose fibers according to claim 10, wherein the carboxymethyl cellulose is employed as water-insoluble sodium croscarmellose.

12. The modified cellulose fibers according to anyone of claims 10 and 11, wherein the dried or isolated modified cellulose fibers have a pH in the range of pH 5 to pH 8 on introduction again into water.

13. Use of one or more modified cellulose fibers according to claims 10 to 12 for use as a filter aid.

14. The use according to claim 13 for preparation of the filter aid as deadend tube filters, deadend sheet filters, deadend disk filters, deadend leaf filters or layered sheet filters.

15. A method for artificial clarification of cloudy liquids, **characterized in that** one or more filter aids used according to claims 13 or 14 are employed.

## Revendications

1. Procédé en vue de la fabrication de fibres de cellulose modifiées pour la clarification artificielle de substances à action néphélométrique issues de liquides avec les étapes suivantes :
• Pesée d'un mélange de fibres se composant de
80 à 99,9 % en poids de fibres de cellulose,
0,1 à 10 % en poids de sodium de croscarmellose et
0 à 10 % en poids d'un ou plusieurs additifs ;
• Gonflement et préparation du mélange de fibres en milieu neutre à alcalin ;
• Cuisson du mélange de fibres ;
• Lavage ;
• Isolation des fibres modifiées.

2. Procédé selon la revendication 1, sachant que le mélange de fibres est homogénéisé en vue de la fabrication de fibres de cellulose modifiées.

3. Procédé selon la revendication 2, sachant que les fibres de cellulose sont sélectionnées à partir du groupe des fibres contenant de la cellulose, des fibres à base de cellulose, des fibres de céréales, du bois, du bambou, des broussailles coupées, des déchets de broussailles et des mélanges de ceux-ci, et sachant que les fibres présentent une longueur de fibres moyennes dans la section de <1 à 500 pm.

4. Procédé selon les revendications 2 ou 3, sachant que le mélange de fibres selon l'étape (a) présente 92 à 99 % en poids de fibres de cellulose, 1 à 8 % en poids de sodium de croscarmellose et 0 à 4 % en poids d'un ou plusieurs additifs.

5. Procédé selon la revendication 3, sachant que le mélange de fibres selon l'étape (a) est sélectionné parmi une composition se composant de 90 à 99,9 % en poids de fibres de cellulose, de 0,1 à 5 % en poids de sodium de croscarmellose et de 0 à 5 % en poids d'un ou plusieurs additifs, ou de 90 à 99 % en poids de fibres de cellulose, de 1 à 5 % en poids de sodium de croscarmellose et de 0 à 5 % en poids d'un ou plusieurs additifs.

6. Procédé selon les revendications 1 à 4, sachant qu'un ou plusieurs additifs sont sélectionnés à partir du groupe des additifs se composant de la pectine, du carragheen, de l'ichthyocolle, des hydrocolloïdes, de l'amidon, des gallotannins, du sol de silice, du gel de silice, de la polyvinylpyrrolidone et de la polyvinylpolypyrrolidone ainsi que de mélanges de ceux-ci.

7. Procédé selon les revendications 1 à 4, sachant que pour la préparation du mélange de fibres, la valeur de pH est ajustée avec au moins un acide et/ou avec au moins une base sur une valeur entre pH6 et pH13.

8. Procédé selon les revendications 1 à 7, sachant que pour le parachèvement du mélange de fibres, la masse humide est séchée jusqu'à une teneur résiduelle en eau de 2 à 10 % en poids.

9. Procédé selon les revendications 1 à 8, sachant que le mélange de fibres parachevé est transformé lors d'une autre étape de procédé comme masse humide ou séchée en des ressources de filtrage et/ou des plaques de filtres.

10. Fibres de cellulose modifiées pour la clarification artificielle de substances à action néphélométrique issues d'un liquide se composant de :
a) 80 à 99,9 % en poids d'un tissu fonctionnel principal à base de fibres de cellulose ;
b) 0,1 à 10 % en poids d'un tissu fonctionnel complémentaire à base de carboxyméthylcelluloses et
c) 0 à 10 % en poids d'un ou plusieurs additifs, sachant que les fibres de cellulose modifiée sont fabriquées avec le procédé selon une quelconque des revendications 1 à 9.

11. Fibres de cellulose modifiées selon la revendication 10, sachant que la carboxyméthylcellulose est mise en œuvre comme sodium de croscarmellose insoluble à l'eau.

12. Fibres de cellulose modifiées selon une quelconque des revendications 10 et 11, sachant que les fibres de cellulose modifiées séchées ou isolées présentent une valeur de pH dans la plage de pH5 à pH8 en cas de nouvelle introduction dans l'eau.

13. Utilisation d'une ou plusieurs fibres de cellulose modifiées selon les revendications 10 à 12 pour l'utilisation comme une ressource de filtrage.

14. Utilisation selon la revendication 13 en vue de l'aménagement de la ressource de filtrage comme filtre d'alluvionnage à bougies, comme filtre d'alluvionnage à couches, comme filtre d'alluvionnage à disques, comme filtre d'alluvionnage à feuilles ou comme filtre à couches de plaques.

15. Procédé en vue de la fabrication de liquides troubles, **caractérisé en ce qu'**une ou plusieurs ressources de filtrage utilisées selon la revendication 13 ou 14 sont mises en œuvre.
